(19) Europäisches Patentamt / European Patent Office / Office européen des brevets

(11) **EP 2 405 659 A1**

(12) **EUROPEAN PATENT APPLICATION**
published in accordance with Art. 153(4) EPC

(43) Date of publication:
**11.01.2012 Bulletin 2012/02**

(51) Int Cl.:
***H04N 7/32*** *(2006.01)*

(21) Application number: **10748659.9**

(22) Date of filing: **25.02.2010**

(86) International application number:
**PCT/JP2010/052925**

(87) International publication number:
**WO 2010/101064 (10.09.2010 Gazette 2010/36)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.03.2009 JP 2009054077**

(71) Applicant: **Sony Corporation
Tokyo 108-0075 (JP)**

(72) Inventor: **SATO Kazushi
Tokyo 108-0075 (JP)**

(74) Representative: **Malden, Nicholas et al
D Young & Co LLP
120 Holborn
London EC1N 2DY (GB)**

(54) **IMAGE PROCESSING DEVICE AND METHOD**

(57) The present invention relates to an image processing device and method which enable increase in compressed information to be suppressed, and also enable prediction precision to be improved.

A precision flag generating unit 93 compares the precision parameters of the motion vector information of a current block from a current motion vector precision determining unit 91, and the precision parameters of the motion vector information of an adjacent block from an adjacent motion vector precision determining unit 92, and generates a precision flag indicating whether the precision of the motion vector information of the current block, and the precision of the motion vector information of the adjacent block agree or differ. This precision flag is output to a lossless encoding unit 66 and encoded along with motion vector information $mvd_E$ and so forth in the event that a prediction image in the optimal inter prediction mode has been selected by a prediction image selecting unit 77. The present invention may be applied to an image encoding device which performs encoding using the H. 264/AVC system, for example.

FIG. 7

EP 2 405 659 A1

**Description**

Technical Field

The present invention relates to an image processing device and method, and specifically relates to an image processing device and method which enable increase in compressed information to be suppressed and also enable prediction precision to be improved.

Background Art

In recent years, devices have come into widespread use which subject an image to compression encoding by employing an encoding system handling image information as digital signals, and at this time compress the image by orthogonal transform such as discrete cosine transform or the like and motion compensation, taking advantage of redundancy which is a feature of the image information, in order to perform highly efficient transmission and accumulation of information. Examples of this encoding method include MPEG (Moving Picture Experts Group) and so forth.

In particular, MPEG2 (ISO/IEC 13818-2) is defined as a general-purpose image encoding system, and is a standard encompassing both of interlaced scanning images and sequential-scanning images, and standard resolution images and high definition images. For example, MPEG2 has widely been employed now by broad range of applications for professional usage and for consumer usage. By employing the MPEG2 compression system, a code amount (bit rate) of 4 through 8 Mbps is allocated in the event of an interlaced scanning image of standard resolution having 720 × 480 pixels, for example. By employing the MPEG2 compression system, a code amount (bit rate) of 18 through 22 Mbps is allocated in the event of an interlaced scanning image of high resolution having 1920 × 1088 pixels, for example. Thus, a high compression rate and excellent image quality can be realized.

MPEG2 has principally been aimed at high image quality encoding adapted to broadcasting usage, but does not handle lower code amount (bit rate) than the code amount of MPEG1, i.e., an encoding system having a higher compression rate.

It is expected that demand for such an encoding system will increase from now on due to the spread of personal digital assistants, and in response to this, standardization of the MPEG4 encoding system has been performed. With regard to an image encoding system, the specification thereof was confirmed as international standard as ISO/IEC 14496-2 in December in 1998.

Further, in recent years, standardization of a standard called H.26L (ITU-T Q6/16 VCEG) has progressed with image encoding for television conference usage as the object. With H.26L, it has been known that though greater computation amount is requested for encoding and decoding thereof as compared to a conventional encoding system such as MPEG2 or MPEG4, higher encoding efficiency is realized. Also, currently, as part of activity of MPEG4, standardization for taking advantage of a function that is not supported by H.26L with this H.26L taken as base to realize higher encoding efficiency has been performed as Joint Model of Enhanced-Compression Video Coding. As a schedule of standardization, H.264 and MPEG-4 Part10

(Advanced Video Coding, hereafter referred to as H.264/AVC) become an international standard in March, 2003.

Incidentally, with the MPEG2 system, motion prediction and compensation processing with 1/2 pixel precision has been performed by linear interpolation processing. On the other hand, with the H.264/AVC system, prediction and compensation processing with 1/4 pixel precision using 6-tap FIR (Finite Impulse Response Filter) filter has been performed.

With the MPEG2 system, in the event of the frame motion compensation mode, motion prediction and compensation processing is performed in increments of 16 × 16 pixels. In the event of the field motion compensation mode, motion prediction and compensation processing is performed as to each of the first field and the second field in increments of 16 × 8 pixels.

On the other hand, with the H.264/AVC system, motion prediction and compensation can be performed with the block size taken as variable. Specifically, with the H.264/AVC system, one macro block made up of 16 × 16 pixels may be divided into one of the partitions of 16 × 16, 16 × 8, 8 × 16, and 8 × 8 with each partition having independent motion vector information. Also, an 8 × 8 partition may be divided into one of the sub-partitions of 8 × 8, 8 × 4, 4 × 8, and 4 × 4 with each sub-partition having independent motion vector information.

However, with the H.264/AVC system, by motion prediction and compensation processing with 1/4 pixel precision and block variable being performed, vast amounts of motion vector information are generated, leading to deterioration in encoding efficiency if these are encoded without change.

Therefore, it has been proposed to suppress deterioration in encoding efficiency by a method for generating the prediction motion vector information of a current block to be encoded from now on using the already encoded motion vector information of an adjacent block by median operation, or the like.

Incidentally, in recent years, study has been performed so as to further improve the efficiency of the H.264/AVC system. As one of encoding methods for this, motion prediction with 1/8 pixel precision has been proposed in NPL 1.

Specifically, with NPL 1, interpolation processing with 1/2 pixel precision is performed by a filter [-3, 12, -39, 158, 158, -39, 12, -3] / 256. Also, interpolation processing with 1/4 pixel precision is performed by a filter [-3, 12, -37, 229, 71, -21, 6, -1] / 256, and interpolation processing with 1/8 pixel precision is performed by linear interpolation.

In this way, motion prediction using interpolation processing with higher pixel precision is performed, whereby prediction precision can be improved, and improvement in encoding efficiency can be realized particularly with a relatively slow motion sequence having high texture in resolution.

Citation List

Non Patent Literature

NPL 1: "Motion compensated prediction with 1/8-pel displacement vector resolution", VCEG-AD09, ITU-Telecommunications Standardization Sector STUDY GROUP Question 6 Video coding Experts Group (VCEG), 23-27 Oct 2006

Summary of Invention

Technical Problem

Now, let us consider motion vector information within compressed image information to be transmitted to the decoding side. With integer pixel precision, regarding motion vector information of which the value is "1", in the event of performing motion prediction with 1/4 pixel precision, the value on the processing within compressed image information becomes "4", but in the event of performing motion prediction with 1/8 pixel precision, the value on the processing within compressed image information becomes "8".

Specifically, in the case of performing motion prediction with 1/8 pixel precision, many more code amounts have to be assigned to motion vector information as compared to the case of performing motion prediction with 1/4 pixel precision. In the event that an amount equivalent to this increase exceeds improvement in motion prediction efficiency, when performing motion prediction with 1/8 pixel precision, the efficiency may conversely decrease.

The present invention has been made in light of such a situation, which suppresses increase in compressed information and also improves prediction precision.

Solution to Problem

An image processing device according to a first aspect of the present invention includes: precision flag generating means configured to generate a precision flag indicating whether the precision of the motion vector information of a current block, and the precision of the motion vector information of an adjacent block adjacent to the current block agree or differ; and encoding means configured to encode the motion vector information of the current block, and the precision flag generated by the precision flag generating means.

The image processing device may further include: prediction motion vector generating means configured to perform median prediction by converting the precision of the motion vector information of the adjacent block into the precision of the motion vector information of the current block to generate prediction motion vector information in the event that the prediction flag generated by the precision flag generating means indicates that the precision of the motion vector information of the current block, and the precision of the motion vector information of the adjacent block differ; with the encoding means encoding difference between the motion vector information of the current block, and the prediction motion vector information as the motion vector information of the current block.

The precision flag generating means and the prediction motion vector generating means may use a block adjacent to the left of the current block as the adjacent block.

The precision flag generating means and the prediction motion vector generating means may use a block which is adjacent to the current block and which also has been most recently subjected to encoding processing, as the adjacent block.

The precision flag generating means and the prediction motion vector generating means may use a block which is adjacent to the current block, and which also provides the motion vector information selected by median prediction, as the adjacent block.

An image processing method according to a first aspect of the present invention includes the step of: causing an image processing device to generate a precision flag indicating whether the precision of the motion vector information of a current block, and the precision of the motion vector information of an adjacent block adjacent to the current block agree or differ; and to encode the motion vector information of the current block, and the generated precision flag.

An image processing device according to a second aspect of the present invention includes: decoding means configured to decode the encoded motion vector information of a current block, and a precision flag indicating whether the precision of the motion vector information of the current block, and the precision of the motion vector information of an adjacent block adjacent to the current block agree or differ; motion vector restructuring means configured to restructure the motion vector information of the current block decoded by the decoding means using the precision flag decoded by the decoding means; and prediction image generating means configured to generate the prediction image of the current block using the motion vector information of the current block restructured by the motion vector restructuring means.

The image processing device may further include: prediction motion vector generating means configured to perform median prediction by converting the precision of the motion vector information of the adjacent block into the precision of the motion vector information of the current block to generate prediction motion vector information in the event that the prediction flag decoded by the decoding means indicates that the precision of the motion vector information of the current block, and the precision of the motion vector information of the adjacent block differ; with the motion vector restructuring means restructuring the motion vector information of the current block decoded by the decoding means using the precision flag decoded by the decoding means, and the prediction motion vector information generated by the prediction motion vector generating means.

The motion vector restructuring means and the prediction motion vector generating means may use a block adjacent to the left of the current block as the adjacent block.

The motion vector restructuring means and the prediction motion vector generating means may use a block which is adjacent to the current block and which also has been most recently subjected to encoding processing, as the adjacent block.

The motion vector restructuring means and the prediction motion vector generating means may use a block which is adjacent to the current block, and which also provides the motion vector information selected by median prediction, as the adjacent block.

An image processing method according to the second aspect of the present invention includes the step of: causing an image processing device to decode the encoded motion vector information of a current block, and a precision flag indicating whether the precision of the motion vector information of the current block, and the precision of the motion vector information of an adjacent block adjacent to the current block agree or differ; to restructure the decoded motion vector information of the current block using the decoded precision flag; and to generate the prediction image of the current block using the restructured motion vector information of the current block.

With the first aspect of the present invention, a precision flag indicating whether the precision of the motion vector information of a current block, and the precision of the motion vector information of an adjacent block adjacent to the current block agree or differ is generated, and the generated precision flag is encoded along with the motion vector information of the current block.

With the second aspect of the present invention, decode the encoded motion vector information of a current block, and a precision flag indicating whether the precision of the motion vector information of the current block, and the precision of the motion vector information of an adjacent block adjacent to the current block agree or differ are decoded. The decoded motion vector information of the current block is restructured using the decoded precision flag, and the prediction image of the current block is generated using the restructured motion vector information of the current block.

Note that the above-mentioned image processing devices may be stand-alone devices, or may be internal blocks making up a single image encoding device or image decoding device. Advantageous Effects of Invention

According to the first aspect of the present invention, images can be encoded. Also, according to the first aspect of the present invention, increase in compressed information can be suppressed, and also prediction precision can be improved.

According to the second aspect of the present invention, images can be decoded. Also, according to the second aspect of the present invention, increase in compressed information can be suppressed, and also prediction precision can be improved.

Brief Description of Drawings

[Fig. 1] Fig. 1 is a block diagram illustrating a configuration of an embodiment of an image encoding device to which the present invention has been applied.
[Fig. 2] Fig. 2 is a diagram for describing motion prediction and compensation processing with variable block size.
[Fig. 3] Fig. 3 is a diagram for describing motion prediction and compensation processing with 1/4 pixel precision.
[Fig. 4] Fig. 4 is a diagram for describing a motion prediction and compensation method of multi-reference frames.

[Fig. 5] Fig. 5 is a diagram for describing an example of a motion vector information generating method.

[Fig. 6] Fig. 6 is a diagram for describing a time direct mode.

[Fig. 7] Fig. 7 is a block diagram illustrating a configuration example of the motion prediction and competition unit and motion vector precision determining unit in Fig. 1.

[Fig. 8] Fig. 8 is a flowchart for describing the encoding processing of the image encoding device in Fig. 1.

[Fig. 9] Fig. 9 is a flowchart for describing prediction processing in step S21 in Fig. 8.

[Fig. 10] Fig. 10 is a flowchart for describing intra prediction processing in step S31 in Fig. 9.

[Fig. 11] Fig. 11 is a flowchart for describing inter motion prediction processing in step S32 in Fig. 9.

[Fig. 12] Fig. 12 is a flowchart for describing motion vector precision determination processing in step S53 in Fig. 11.

[Fig. 13] Fig. 13 is a block diagram illustrating the configuration of an embodiment of an image decoding device to which the present invention has been applied.

[Fig. 14] Fig. 14 is a block diagram illustrating a configuration example of the motion prediction and competition unit and motion vector precision determining unit in Fig. 13.

[Fig. 15] Fig. 15 is a flowchart for describing the decoding processing of the image decoding device in Fig. 13.

[Fig. 16] Fig. 16 is a flowchart for describing prediction processing in step S138 in Fig. 15.

[Fig. 17] Fig. 17 is a diagram illustrating an example of an extended block size.

[Fig. 18] Fig. 18 is a block diagram illustrating a configuration example of the hardware of a computer.

[Fig. 19] Fig. 19 is a block diagram illustrating a principal configuration example of a television receiver to which the present invention has been applied.

[Fig. 20] Fig. 20 is a block diagram illustrating a principal configuration example of a cellular phone to which the present invention has been applied.

[Fig. 21] Fig. 21 is a block diagram illustrating a principal configuration example of a hard disk recorder to which the present invention has been applied.

[Fig. 22] Fig. 22 is a block diagram illustrating a principal configuration example of a camera to which the present invention has been applied.

Description of Embodiments

Hereafter, an embodiment of the present invention will be described with reference to the drawings.

[Configuration Example of Image Encoding Device]

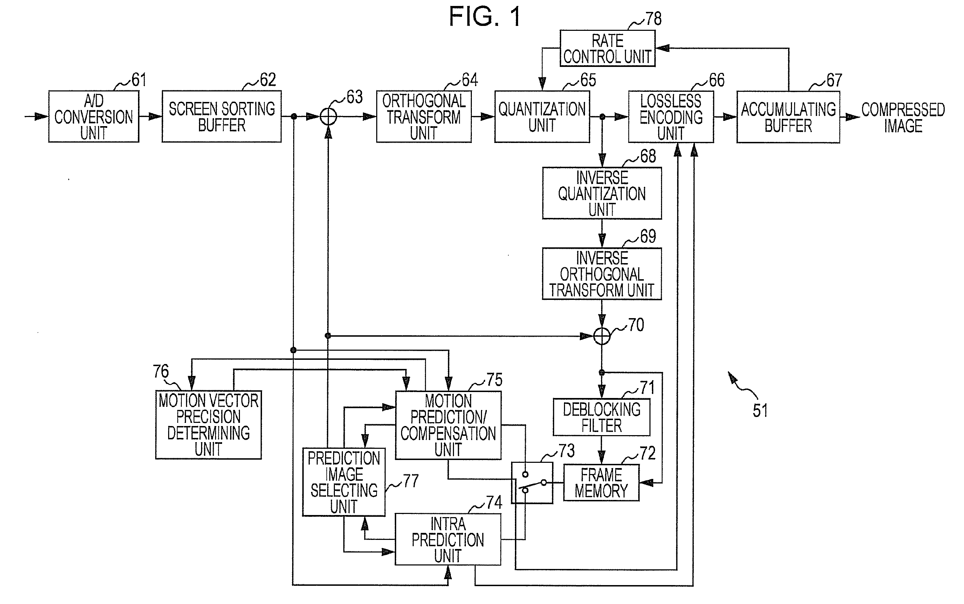

Fig. 1 represents the configuration of an embodiment of an image encoding device serving as an image processing device to which the present invention has been applied.

This image encoding device 51 subjects an image to compression encoding using, for example, the H.264 and MPEG-4 Part10 (Advanced Video Coding) (hereafter, described as 264/AVC) system.

With the example in Fig. 1, the image encoding device 51 is configured of an A/D conversion unit 61, a screen sorting buffer 62, a computing unit 63, an orthogonal transform unit 64, a quantization unit 65, a lossless encoding unit 66, an accumulating buffer 67, an inverse quantization unit 68, an inverse orthogonal transform unit 69, a computing unit 70, a deblocking filter 71, frame memory 72, a switch 73, an intra prediction unit 74, a motion prediction/compensation unit 75, a motion vector precision determining unit 76, a prediction image selecting unit 77, and a rate control unit 78.

The A/D conversion unit 61 converts an input image from analog to digital, and outputs to the screen sorting buffer 62 for storing. The screen sorting buffer 62 sorts the images of frames in the stored order for display into the order of frames for encoding according to GOP (Group of Picture).

The computing unit 63 subtracts from the image read out from the screen sorting buffer 62 the prediction image from the intra prediction unit 74 selected by the prediction image selecting unit 77 or the prediction image from the motion prediction/compensation unit 75, and outputs difference information thereof to the orthogonal transform unit 64. The orthogonal transform unit 64 subjects the difference information from the computing unit 63 to orthogonal transform, such as discrete cosine transform, Karhunen-Loéve transform, or the like, and outputs a transform coefficient thereof. The quantization unit 65 quantizes the transform coefficient that the orthogonal transform unit 64 outputs.

The quantized transform coefficient that is the output of the quantization unit 65 is input to the lossless encoding unit 66, and subjected to lossless encoding, such as variable length coding, arithmetic coding, or the like, and compressed.

The lossless encoding unit 66 obtains information indicating intra prediction from the intra prediction unit 74, and obtains information indicating an intra inter prediction mode, and so forth from the motion prediction/compensation unit 75. Note that, hereafter, the information indicating intra prediction and the information indicating inter prediction will be referred to as intra prediction mode information and inter prediction mode information, respectively.

The lossless encoding unit 66 encodes the quantized transform coefficient, and also encodes the information indicating intra prediction, the information indicating an inter prediction mode, and so forth, and takes these as part of header information in the compressed image. The lossless encoding unit 66 supplies the encoded data to the accumulating buffer 67 for accumulation.

For example, with the lossless encoding unit 66, lossless encoding processing, such as variable length coding, arithmetic coding, or the like, is performed. Examples of the variable length coding include CAVLC (Context-Adaptive Variable Length Coding) determined by the H.264/AVC system. Examples of the arithmetic coding include CABAC (Context-Adaptive Binary Arithmetic Coding).

The accumulating buffer 67 outputs the data supplied from the lossless encoding unit 66 to, for example, a downstream storage device or transmission path or the like not shown in the drawing, as a compressed image encoded by the H.264/AVC system.

Also, the quantized transform coefficient output from the quantization unit 65 is also input to the inverse quantization unit 68, subjected to inverse quantization, and then subjected to further inverse orthogonal transform at the inverse orthogonal transform unit 69. The output subjected to inverse orthogonal transform is added to the prediction image supplied from the prediction image selecting unit 77 by the computing unit 70, and changed into a locally decoded image. The deblocking filter 71 removes block distortion from the decoded image, and then supplies to the frame memory 72 for accumulation. An image before the deblocking filter processing is performed by the deblocking filter 71 is also supplied to the frame memory 72 for accumulation.

The switch 73 outputs the reference images accumulated in the frame memory 72 to the motion prediction/compensation unit 75 or intra prediction unit 74.

With this image encoding device 51, the I picture, B picture, and P picture from the screen sorting buffer 62 are supplied to the intra prediction unit 74 as an image to be subjected to intra prediction (also referred to as intra processing), for example. Also, the B picture and P picture read out from the screen sorting buffer 62 are supplied to the motion prediction/compensation unit 75 as an image to be subjected to inter prediction (also referred to as inter processing).

The intra prediction unit 74 performs intra prediction processing of all of the intra prediction modes serving as candidates based on the image to be subjected to intra prediction read out from the screen sorting buffer 62, and the reference image supplied from the frame memory 72 to generate a prediction image.

At this time, the intra prediction unit 74 calculates a cost function value as to all of the intra prediction modes serving as candidates, and selects the intra prediction mode of which the calculated cost function value provides the minimum value, as the optimal intra prediction mode.

The intra prediction unit 74 supplies the prediction image generated in the optimal intra prediction mode, and the cost function value thereof to the prediction image selecting unit 77. In the event that the prediction image generated in the optimal intra prediction mode has been selected by the prediction image selecting unit 77, the intra prediction unit 74 supplies the information indicating the optimal intra prediction mode to the lossless encoding unit 66. The lossless encoding unit 66 encodes this information, and takes this as part of the header information in a compressed image.

The motion prediction/compensation unit 75 performs motion prediction and compensation processing regarding all of the inter prediction modes serving as candidates. Specifically, as to the motion prediction/compensation unit 75, the image to be subjected to inter processing read out from the screen sorting buffer 62 is supplied and the reference image is supplied from the frame memory 72 via the switch 73. The motion prediction/compensation unit 75 detects the motion vectors of all of the inter prediction modes serving as candidates based on the image to be subjected to inter processing and the reference image, subjects the reference image to compensation processing based on the motion vectors, and generates a prediction image.

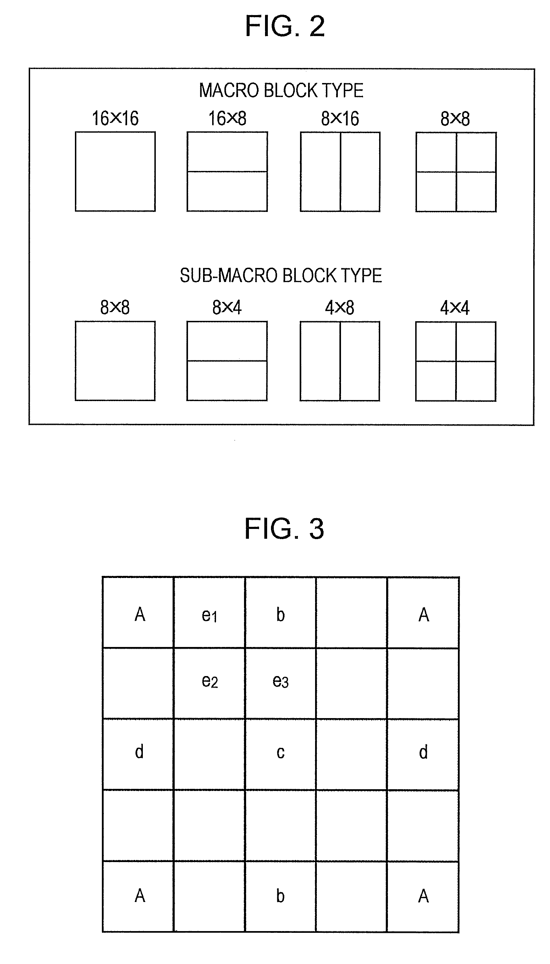

Note that the motion prediction/compensation unit 75 performs the motion prediction and compensation processing with 1/8 pixel precision described in the above-mentioned NPL 1 instead of the motion prediction and compensation processing with 1/4 pixel precision determined in the H.264/AVC system, which will be described later with reference to Fig. 3.

The motion vector information of the current block, and the motion vector information of an adjacent block adjacent to the current block, obtained by the motion prediction/compensation unit 75 are supplied to the motion vector precision determining unit 76. In response to this, a precision flag indicating whether the precision of the motion vector information of the current block, and the precision of the motion vector information of the adjacent block agree or differ is supplied from the motion vector precision determining unit 76 to the motion prediction/compensation unit 75.

The motion prediction/compensation unit 75 uses the motion vector information of the adjacent block to calculate the prediction motion vector information of the current block based on the precision flag thereof, and takes difference between the obtained motion vector information and the generated prediction motion vector information as motion vector information to be transmitted to the decoding side.

Also, the motion prediction/compensation unit 75 calculates a cost function value as to all of the inter prediction modes serving as candidates. The motion prediction/compensation unit 75 determines, of the calculated cost function values, a prediction mode that provides the minimum value, to be the optimal inter prediction mode.

The motion prediction/compensation unit 75 supplies the prediction image generated in the optimal inter prediction mode, and the cost function value thereof to the prediction image selecting unit 77. In the event that the prediction image generated in the optimal inter prediction mode has been selected by the prediction image selecting unit 77, the motion prediction/compensation unit 75 outputs information indicating the optimal inter prediction mode (inter prediction mode information) to the lossless encoding unit 66.

At this time, the motion vector information, precision flag, reference frame information, and so forth are output to the lossless encoding unit 66. The lossless encoding unit 66 also subjects the information from the motion prediction/compensation unit 75 to lossless encoding processing such as variable length coding or arithmetic coding, and inserts into the header portion of the compressed image.

The motion vector information of the current block, and the motion vector information of the adjacent block from the motion prediction/compensation unit 75 are supplied to the motion vector precision determining unit 76. The motion vector precision determining unit 76 generates a precision flag indicating whether the precision of the motion vector information of the current block, and the precision of the motion vector information of the adjacent block agree or differ, and supplies the generated precision flag to the motion prediction/compensation unit 75.

The prediction image selecting unit 77 determines the optimal prediction mode from the optimal intra prediction mode and the optimal inter prediction mode based on the cost function values output from the intra prediction unit 74 or motion prediction/compensation unit 75. The prediction image selecting unit 77 then selects the prediction image in the determined optimal prediction mode, and supplies to the computing units 63 and 70. At this time, the prediction image selecting unit 77 supplies the selection information of the prediction image to the intra prediction unit 74 or motion prediction/compensation unit 75.

The rate control unit 78 controls the rate of the quantization operation of the quantization unit 65 based on a compressed image accumulated in the accumulating buffer 67 so as not to cause overflow or underflow.

[Description of H.264/AVC System]

Fig. 2 is a diagram illustrating an example of the block size of motion prediction and compensation according to the H.264/AVC system. With the H.264/AVC system, motion prediction and compensation is performed with the block size taken as variable.

Macro blocks made up of $16 \times 16$ pixels divided into $16 \times 16$-pixel, $16 \times 8$-pixel, $8 \times 16$-pixel, and $8 \times 8$-pixel partitions are shown from the left in order on the upper tier in Fig. 2. $8 \times 8$-pixel partitions divided into $8 \times 8$-pixel, $8 \times 4$-pixel, $4 \times 8$-pixel, and $4 \times 4$-pixel sub partitions are shown from the left in order on the lower tier in Fig. 2.

Specifically, with the H.264/AVC system, one macro block may be divided into one of $16 \times 16$-pixel, $16 \times 8$-pixel, $8 \times 16$-pixel, and $8 \times 8$-pixel partitions with each partition having independent motion vector information. Also, an $8 \times 8$-pixel partition may be divided into one of $8 \times 8$-pixel, $8 \times 4$-pixel, $4 \times 8$-pixel, and $4 \times 4$-pixel sub partitions with each sub partition having independent motion vector information.

Fig. 3 is a diagram for describing prediction and compensation processing with 1/4 pixel precision according to the H.264/AVC system. With the H.264/AVC system, prediction and compensation processing with 1/4 pixel precision using 6-tap FIR (Finite Impulse Response Filter) filter is performed.

With the example in Fig. 3, positions A indicate the positions of integer precision pixels, and positions b, c, and d indicate positions with 1/2 pixel precision, and positions e1, e2, and e3 indicate positions with 1/4 pixel precision. First, hereafter, Clip() is defined like the following Expression (1).

[Mathematical Expression 1]

$$\mathrm{Clip1(a)} = \begin{cases} 0; \mathrm{if}\,(a<0) \\ a; \mathrm{otherwise} \\ \mathrm{max\_pix}; \mathrm{if}\,(a>\mathrm{max\_pix}) \end{cases} \quad \cdots (1)$$

Note that, in the event that the input image has 8-bit precision, the value of max_pix becomes 255.

The pixel values in the positions b and d are generated like the following Expression (2) using a 6-tap FIR filter.

[Mathematical Expression 2]

$$F = A_{-2} - 5 \cdot A_{-1} + 20 \cdot A_0 + 20 \cdot A_1 - 5 \cdot A_2 + A_3$$

$$b, d = \text{Clip1}((F + 16) >> 5) \qquad \qquad ... (2)$$

The pixel value in the position c is generated like the following Expression (3) by applying a 6-tap FIR filter in the horizontal direction and the vertical direction.

[Mathematical Expression 3]

$$F = b_{-2} - 5 \cdot b_{-1} + 20 \cdot b_0 + 20 \cdot b_1 - 5 \cdot b_2 + b_3$$

or

$$F = d_{-2} - 5 \cdot d_{-1} + 20 \cdot d_0 + 20 \cdot d_1 - 5 \cdot d_2 + d_3$$

$$c = \text{Clip1}((F + 512) >> 10) \qquad \qquad ... (3)$$

Note that Clip processing is lastly executed only once after both of sum-of-products processing in the horizontal direction and the vertical direction are performed.

Positions e1 through e3 are generated by linear interpolation as shown in the following Expression (4).

[Mathematical Expression 4]

$$e_1 = (A + b + 1) >> 1$$

$$e_2 = (b + d + 1) >> 1$$

$$e_3 = (b + c + 1) >> 1 \qquad \qquad ... (4)$$

Note that, with the motion prediction/compensation unit 75 in Fig. 1, the motion prediction and compensation processing with 1/8 pixel precision described in the above-mentioned NPL 1 is performed instead of the motion prediction and compensation processing with 1/4 pixel precision.

Specifically, with the motion prediction/compensation unit 75, interpolation processing with 1/2 pixel precision is performed using a filter [-3, 12, -39, 158, 158, -39, 12, -3] / 256. Also, interpolation processing with 1/4 pixel precision is performed using a filter [-3, 12, -37, 229, 71, -21, 6, -1] / 256, and interpolation processing with 1/8 pixel precision is performed by linear interpolation.

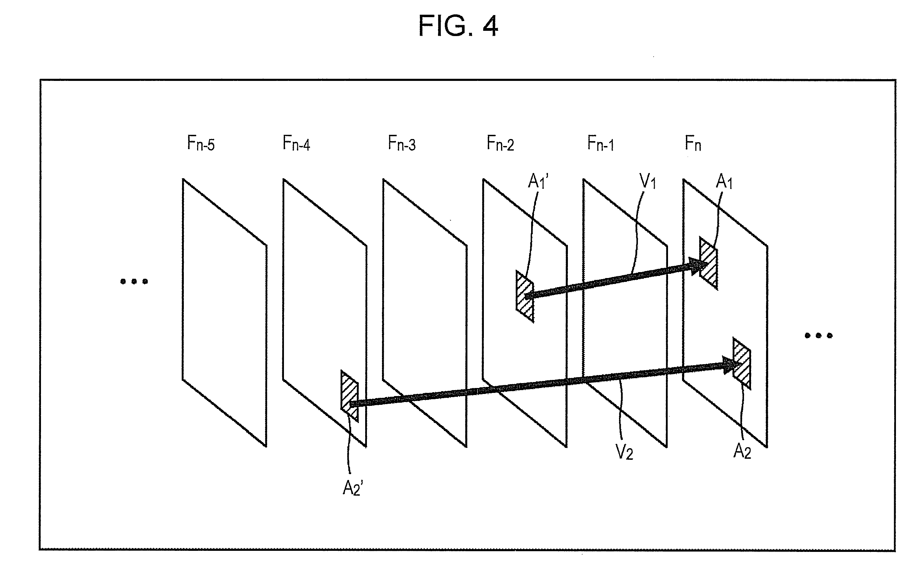

Fig. 4 is a diagram for describing the prediction and compensation processing of multi-reference frames according to the H.264/AVC system. With the H.264/AVC system, the motion prediction and compensation method of multi-reference frames (Multi-Reference Frame) has been determined.

With the example in Fig. 4, the current frame Fn to be encoded from now on, and encoded frames Fn-5, ..., Fn-1 are shown. The frame Fn-1 is, on the temporal axis, a frame one frame ahead of the current frame Fn, the frame Fn-2 is a frame two frames ahead of the current frame Fn, and the frame Fn-3 is a frame three frames ahead of the current frame Fn. Similarly, the frame Fn-4 is a frame four frames ahead of the current frame Fn, and the frame Fn-5 is a frame five frames ahead of the current frame Fn. In general, the closer to the current frame Fn a frame is on the temporal axis, the smaller a reference picture number (ref_id) to be added is. Specifically, the frame Fn-1 has the smallest reference picture number, and hereafter, the reference picture numbers are small in the order of Fn-2, ..., Fn-5.

With the current frame Fn, a block A1 and a block A2 are shown, a motion vector V1 is searched with assuming that the block A1 is correlated with a block A1' of the frame Fn-2 that is two frames ahead of the current frame Fn. Similarly, a motion vector V2 is searched with assuming that the block A2 is correlated with a block A1' of the frame Fn-4 that is four frames ahead of the current frame Fn.

As described above, with the H.264/AVC system, different reference frames may be referenced in one frame (picture) with multi-reference frames stored in memory. Specifically, for example, such that the block A1 references the frame Fn-2, and the block A2 reference the frame Fn-4, independent reference frame information (reference picture number (ref_id)) may be provided for each block in one picture.

Here, the blocks indicate one of 16 × 16-pixel, 16 × 8-pixel, 8 × 16-pixel, and 8 × 8-pixel partitions described with reference to Fig. 2. Reference frames within an 8 × 8-pixel sub-block partition have to agree.

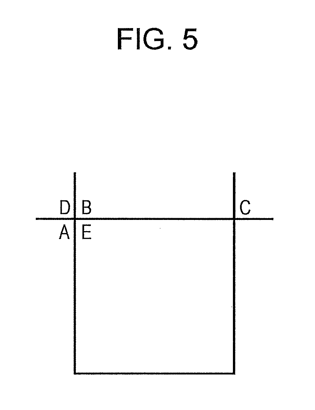

With the H.264/AVC system, by the motion prediction and compensation processing described above with reference to Figs. 2 through 4 being performed, vast amounts of motion vector information are generated, and if these are encoded without change, deterioration in encoding efficiency is caused. In response to this, with the H.264/AVC system, according to a method shown in Fig. 5, reduction in motion vector coding information has been realized.

Fig. 5 is a diagram for describing a motion vector information generating method according to the H.264/AVC system.

With the example in Fig. 5, a current block E to be encoded from now on (e.g., 16 × 16 pixels), and blocks A through D, which have already been encoded, adjacent to the current block E are shown.

Specifically, the block D is adjacent to the upper left of the current block E, the block B is adjacent to above the current block E, the block C is adjacent to the upper right of the current block E, and the block A is adjacent to the left of the current block E. Note that the reason why the blocks A through D are not sectioned is because each of the blocks represents a block having one structure of 16 × 16 pixels through 4 × 4 pixels described above with reference to Fig. 2.

For example, let us say that motion vector information as to X (= A, B, C, D, E) is represented with $mv_X$. First, prediction motion vector information $pmv_E$ as to the current block E is generated like the following Expression (5) by median prediction using motion vector information regarding the blocks A, B, and C.

$$pmv_E = med(mv_A, \; mv_B, \; mv_C) \qquad \cdot \; \cdot \; \cdot \; (5)$$

The motion vector information regarding the block C may not be used (may be unavailable) due to a reason such as the edge of an image frame, before encoding, or the like. In this case, the motion vector information regarding the block D is used instead of the motion vector information regarding the block C.

Data $mvd_E$ to be added to the header portion of the compressed image, serving as the motion vector information as to the current block E, is generated like the following Expression (6) using $pmv_E$.

$$mvd_E = mv_E - pmv_E \qquad \cdot \; \cdot \; \cdot \; (6)$$

Note that, in reality, processing is independently performed as to the components in the horizontal direction and vertical direction of the motion vector information.

Hereafter, in order to distinguish this data $mvd_E$ from the motion vector information obtained by motion prediction, this data $mvd_E$ will also be referred to as difference motion vector information as appropriate.

In this way, prediction motion vector information is generated, difference motion vector information that is difference between the prediction motion vector information generated based on correlation with an adjacent block, and the motion vector information is added to the header portion of the compressed image, whereby the motion vector information can be reduced.

Incidentally, the information amount of the motion vector information regarding B pictures is vast, but with the H.264/AVC system, a mode referred to as a direct mode is prepared. In the direct mode, motion vector information is not stored in a compressed image.

Specifically, on the decoding side, with motion vector information around the current block, or a reference picture, the motion vector information of the current block is extracted from the motion vector information of a co-located block that is a block having the same coordinates as the current block. Accordingly, the motion vector information does not have to be transmitted to the decoding side.

This direct mode includes two types of a Spatial Direct Mode and a Temporal Direct Mode. The spatial direct mode is a mode for taking advantage of correlation of motion information principally in the spatial direction (horizontal and vertical two-dimensional space within a picture), and generally has an advantage in the event of an image including similar motions of which the motion speeds vary. On the other hand, the temporal direct mode is a mode for taking advantage of correlation of motion information principally in the temporal direction, and generally has an advantage in the event of an image including different motions of which the motion speeds are constant.

Which is employed of these spatial direct mode and temporal direct mode can be switched for each slice.

The spatial direct mode according to the H.264/AVC system will be described again with reference to Fig. 5.

With the example in Fig. 5, as described above, the current block E to be encoded from now on (e.g., $16 \times 16$ pixels), and the blocks A through D, which have already been encoded, adjacent to the current block E are shown. Also, the motion vector information as to X (= A, B, C, D, E) is represented with $mv_X$, for example.

The prediction motion vector information $pmv_E$ as to the current block E is generated like the above-mentioned Expression (5) by median prediction using the motion vector information regarding the blocks A, B, and C. Also, motion vector information $mv_E$ as to the current block E in the spatial direct mode is represented with the following Expression (7).

$$mv_E = pmv_E \qquad \ldots (7)$$

Specifically, in the spatial direct mode, the prediction motion vector information generated by median prediction is taken as the motion vector information of the current block. That is to say, the motion vector information of the current block is generated from the motion vector information of encoded blocks. Accordingly, the motion vector according to the spatial direct mode can also be generated on the decoding side, and accordingly, the motion vector information does not have to be transmitted to the decoding side.

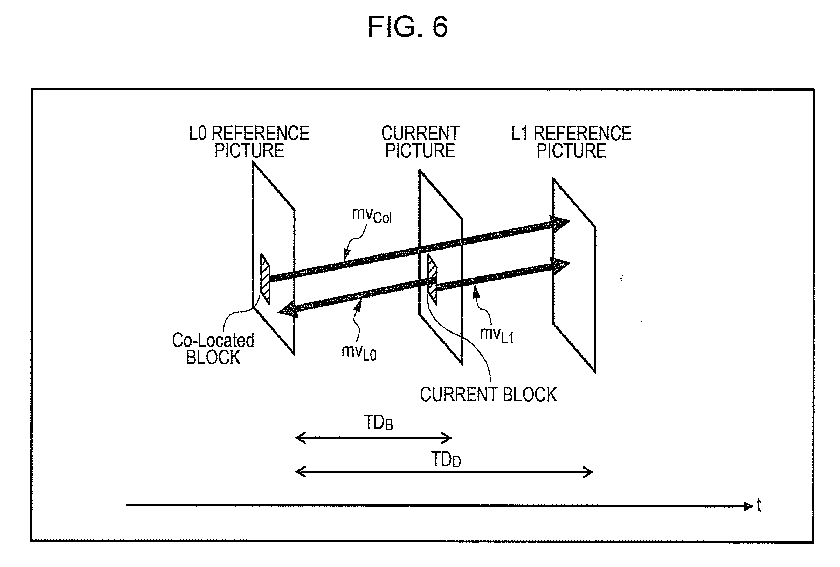

Next, the temporal direct mode according to the H.264/AVC system will be described with reference to Fig. 6.

With the example in Fig. 6, temporal axis t represents elapse of time, an L0 (List0) reference picture, the current picture to be encoded from now on, and an L1 (List1) reference picture are shown from the left in order. Note that, with the H.264/AVC system, the row of the L0 reference picture, current picture, and L1 reference picture is not restricted to this order.

The current block of the current picture is included in a B slice, for example. Accordingly, with regard to the current block of the current picture, L0 motion vector information $mv_{L0}$ and L1 motion vector information $mv_{L1}$ based on the temporal direct mode are calculated as to the L0 reference picture and L1 reference picture.

Also, with the L0 reference picture, motion vector information $mv_{col}$ in a co-located block that is a block positioned in the same spatial address (coordinates) as the current block to be encoded from now on is calculated based on the L0 reference picture and L1 reference picture.

Now, let us say that distance on the temporal axis between the current picture and L0 reference picture is taken as $TD_B$, and distance on the temporal axis between the L0 reference picture and L1 reference picture is taken as $TD_D$. In this case, the L0 motion vector information $mv_{L0}$ in the current picture, and the L1 motion vector information $mv_{L1}$ in the current picture can be calculated with the following Expression (8).

[Mathematical Expression 5]

$$mv_{L0} = \frac{TD_B}{TD_D} mv_{col}$$

$$mv_{L1} = \frac{TD_D - TD_B}{TD_D} mv_{col} \qquad \cdots (8)$$

Note that, with the H.264/AVC system, there is no information equivalent to distances $TD_B$ and $TD_D$ on the temporal axis t as to the current picture within the compressed image. Accordingly, POC (Picture Order Count) that is information indicating the output sequence of pictures is employed as the actual values of the distances $TD_B$ and $TD_D$.

Also, with the H.264/AVC system, there is additionally provided a skip mode serving as a mode wherein motion vector information does not have to be transmitted similarly. In the event that encoded data relating to a motion vector is 0 (the above-mentioned Expression (7) holds in the case of the H.264/AVC system), and also when all of the DCT coefficients are 0, the current block thereof is in the skip mode. Also, in the event of a B picture, when the direct mode is active, and also the DCT coefficient is 0, the current block thereof is in the skip mode.

[Configuration Example of Motion

Prediction/Compensation Unit and Motion Vector Precision Determining Unit]

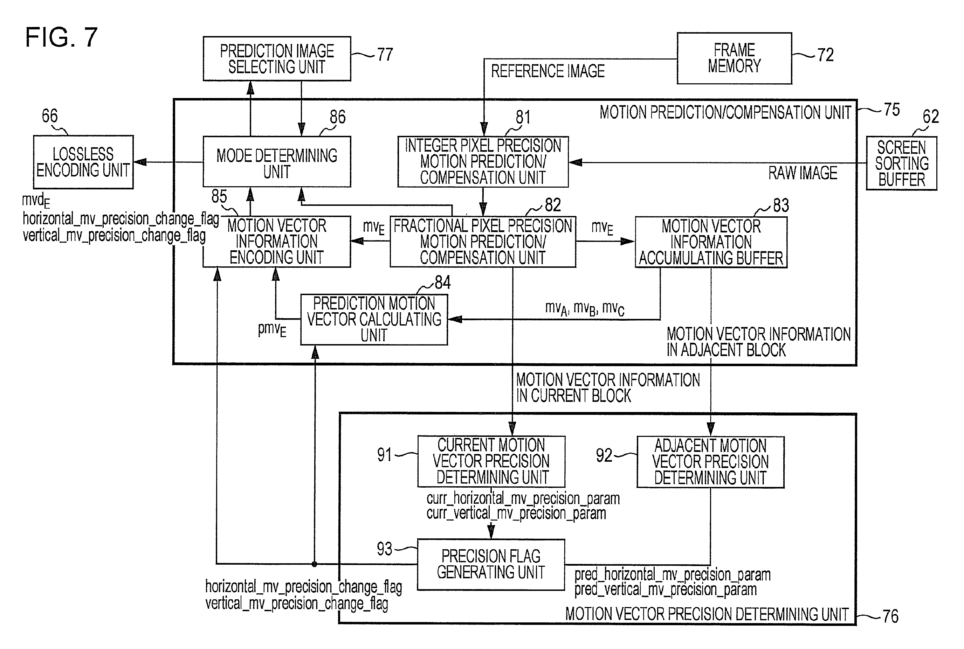

Fig. 7 is a block diagram illustrating a detailed configuration example of the motion prediction/compensation unit, and the motion vector precision determining unit. Note that the details will be described with reference to the above-mentioned current block E and adjacent blocks A through D in Fig. 5 as appropriate.

With the example in Fig. 7, the motion prediction/compensation unit 75 is configured of an integer pixel precision motion prediction/compensation unit 81, a fractional pixel precision motion prediction/compensation unit 82, a motion vector information accumulating buffer 83, a prediction motion vector calculating unit 84, a motion vector information encoding unit 85, and a mode determining unit 86.

The motion vector precision determining unit 76 is configured of a current motion vector precision determining unit 91, an adjacent motion vector precision determining unit 92, and a precision flag generating unit 93.

As to the integer pixel precision motion prediction/compensation unit 81, the raw image to be subjected to inter processing read out from the screen sorting buffer 62 is supplied, and the reference image is supplied from the frame memory 72 via the switch 73. The integer pixel precision motion prediction/compensation unit 81 performs integer pixel precision motion prediction and compensation processing of the current block E regarding all of the inter prediction modes serving as candidates. At this time, the obtained integer pixel precision motion vector information of the current block E is supplied to the fractional pixel precision motion prediction/compensation unit 82 along with an image to be subjected to inter processing, and a reference image.

The fractional pixel precision motion prediction/compensation unit 82 uses the image to be subjected to inter processing and the reference image to perform the fractional pixel precision motion prediction and compensation processing of the current block E based on the integer pixel precision motion vector information. Here, as described above, the motion prediction and compensation processing with 1/8 pixel precision is performed. At this time, the obtained motion vector information $mv_E$ is accumulated in the motion vector information accumulating buffer 83, and also supplied to the motion vector information encoding unit 85 and current motion vector precision determining unit 91. Also, the prediction image obtained by the compensation processing with fractional pixel precision is supplied to the mode determining unit 86 along with the raw image and reference frame information.

The motion vector information accumulating buffer 83 accumulates the motion vector information $mv_X$ (X = A, B, C, D, E) obtained by the fractional pixel precision motion prediction/compensation unit 82.

The prediction motion vector calculating unit 84 reads out the motion vector information $mv_A$, $mv_B$, and $mv_C$ of adjacent blocks adjacent to the current block from the motion vector information accumulating buffer 83. The prediction motion vector calculating unit 84 uses the read motion vector information to calculate the prediction motion vector information $pmv_E$ of the current block E by the median prediction in the above-mentioned Expression (5). At this time, the precision flag generated by the precision flag generating unit 93 (horizontal_mv_precision_change_flag, vertical mv_precision_change_flag) is supplied to the prediction motion vector calculating unit 84.

In the event that this precision flag indicates that the precision of the motion vector information of the current block E, and the precision of the motion vector information of an adjacent block used for generation of prediction motion vector information differ, the prediction motion vector calculating unit 84 performs processing as follows. Specifically, in this case, the prediction motion vector calculating unit 84 converts (adjusts) the precision of the motion vector information of the adjacent block into the precision of the motion vector information of the current block E, and calculates the prediction motion vector information $pmv_E$ of the current block E.

The prediction motion vector information $pmv_E$ of the current block E generated by the prediction motion vector calculating unit 84 is supplied to the motion vector information encoding unit 85.

As to the motion vector information encoding unit 85, the motion vector information $mv_E$ of the current block E is supplied from the fractional pixel precision motion prediction/compensation unit 82, and the prediction motion vector information $pmv_E$ of the current block E is supplied from the prediction motion vector calculating unit 84. Further, the precision flag is supplied from the precision flag generating unit 93 to the motion vector information encoding unit 85.

The motion vector information encoding unit 85 uses the motion vector information $mv_E$ of the current block E, and the prediction motion vector information $pmv_E$ of the current block E to obtain difference motion vector information $mvd_E$ of the current block E to be added to the header portion of the compressed image by the above-mentioned Expression (6). The motion vector information encoding unit 85 supplies the obtained difference motion vector information $mvd_E$ of the current block E to the mode determining unit 86 along with the precision flag.

The prediction image, raw image, and reference frame information from the integer pixel precision motion prediction/compensation unit 82, the difference motion vector information $mvd_E$ and precision flag from the motion vector information encoding unit 85, and so forth are supplied to the mode determining unit 86. The mode determining unit 86 uses the supplied information as appropriate to calculate a cost function value regarding all of the inter prediction modes serving as candidates. The mode determining unit 86 determines the prediction mode of which the cost function value provides the minimum value to be the optimal inter prediction mode, and supplies the prediction image generated in the optimal inter prediction mode, and the cost function value thereof to the prediction image selecting unit 77.

In the event that the prediction image in the optimal inter prediction mode has been selected by the prediction image selecting unit 77, the mode determining unit 86 outputs information indicating the optimal inter prediction mode, the difference motion vector information $mvd_E$, precision flag, reference frame information, and so forth to the lossless encoding unit 66.

The current motion vector precision determining unit 91 distinguishes the precision of the motion vector information $mv_E$ of the current block from the fractional pixel precision motion prediction/compensation unit 82. The current motion vector precision determining unit 91 then determines precision parameters relating to horizontal components and vertical components as to the motion vector information of the current block (curr_horizontal_mv_precision_param, curr_vertical_mv_precision_param). The determined precision parameters of the motion vector information of the current block are supplied to the precision flag generating unit 93.

For example, in the event that the motion vector information $mv_E$ of the current block E has only information up to 1/4 pixel precision, the values of the precision parameter for the horizontal components and the precision parameter for the vertical components of the current block E are set to 0. In the event that the motion vector information $mv_E$ of the current block E has information up to 1/8 pixel precision, the values of the precision parameter for the horizontal components and the precision parameter for the vertical components of the current block E are set to 1.

The adjacent motion vector precision determining unit 92 reads out the motion vector information of the adjacent block of the motion vector information accumulating buffer 83, and distinguishes the precision of the motion vector information of the adjacent block. The adjacent motion vector precision determining unit 92 then determines the precision parameters relating to the horizontal components and vertical parameters as to the motion vector information of the adjacent block (pred_horizontal_mv_precision_param, pred_vertical_mv_precision_param). The determined precision parameters of the motion vector information of the adjacent block are supplied to the precision flag generating unit 93.

For example, in the event that the motion vector information of the adjacent block has only information up to 1/4 pixel precision, the values of the precision parameter for the horizontal components and the precision parameter for the vertical components of the adjacent block are set to 0. In the event that the motion vector information of the adjacent block has information up to 1/8 pixel precision, the values of the precision parameter for the horizontal components and the precision parameter for the vertical components of the adjacent block are set to 1.

Here, the adjacent block is a block that may provide a prediction value (prediction motion vector information) $pmv_E$ to the motion vector information $mv_E$ of the current block E, and examples of this is one block of the blocks A, B, C, and D in Fig. 5. Specifically, the adjacent block is defined by one of the following methods.

A first method is a method using the block A adjacent to the left portion of the current block E as an adjacent block.

A second method is a method using a block lastly subjected to decoding processing as an adjacent block.

A third method is a method using a block that provides a prediction value selected by the median prediction of the above-mentioned Expression (5), as an adjacent block. That is to say, in this case, the precision of a motion vector determined to be a prediction value by median prediction is used.

Note that, with the above-mentioned first method and second method, in the event that a block that provides pred_horizontal_mv_precision_param and pred_vertical_mv_precision_param is the block subjected to intra encoding, processing is performed with the value of the motion vector information thereof taken as 0. Also, in the event of the third method, processing based on the median prediction determined by the H.264/AVC system is performed.

The precision parameters of the motion vector information of the current block E from the current motion vector precision determining unit 91, and the precision parameters of the motion vector information of the adjacent block from the adjacent motion vector precision determining unit 92 are supplied to the precision flag generating unit 93. The precision flag generating unit 93 compares the precision parameters of both, and generates a precision flag indicating whether the precision of the motion vector information of the current block E, and the precision of the motion vector information of the adjacent block agree or differ.

Specifically, in the event that the precision parameters for the horizontal components of the current block E, and the precision parameters for the horizontal components of the adjacent block have the same value, the value of the precision flag for the horizontal components of the current block E (horizontal_mv_precision_change_flag) is set to 0. In the event that the precision parameters for the horizontal components of the current block E, and the precision parameters for the horizontal components of the adjacent block have a different value, the value of the precision flag for the horizontal components of the current block E (horizontal_mv_precision_change_flag) is set to 1.

Also, in the event that the precision parameters for the vertical components of the current block E, and the precision parameters for the vertical components of the adjacent block have the same value, the value of the precision flag for the vertical components of the current block E (vertical_mv_precision_change_flag) is set to 0. In the event that the precision parameters for the vertical components of the current block E, and the precision parameters for the vertical components of the adjacent block have a different value, the value of the precision flag for the vertical components of the current block E (vertical_mv_precision_change_flag) is set to 1.

In other words, the precision flag indicating whether the precision of the motion vector information of the current block E, and the precision of the motion vector information of the adjacent block agree or differ indicates whether the precision of the motion vector information of the current block E has been changed from the precision of the motion vector information of the adjacent block.

The generated precision flags for the horizontal components and for the vertical components of the current block are supplied to the prediction motion vector calculating unit 84 and motion vector information encoding unit 85.

[Description of Encoding Processing of Image Encoding Device]

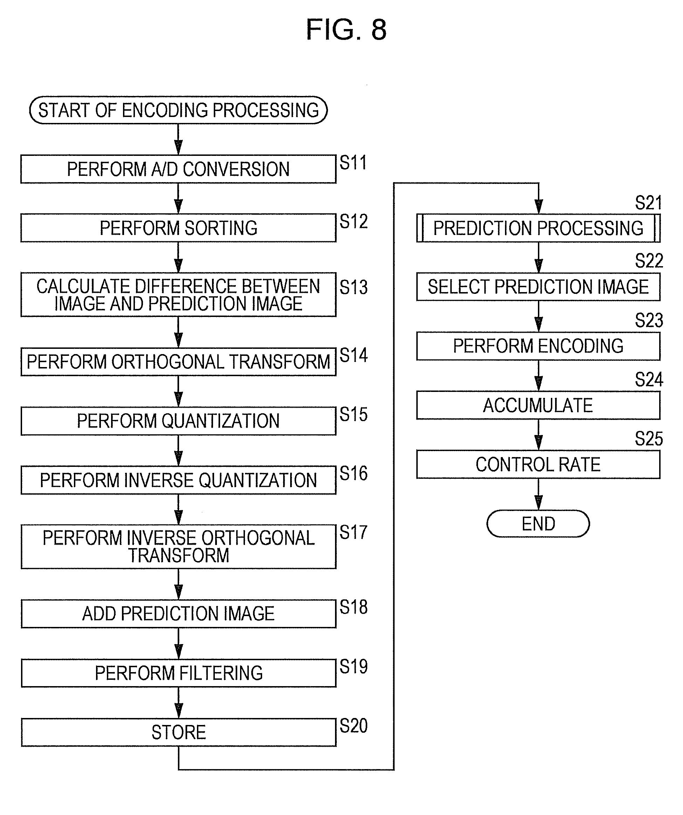

Next, the encoding processing of the image encoding device 51 in Fig. 1 will be described with reference to the flowchart in Fig. 8.

In step S11, the A/D conversion unit 61 converts an input image from analog to digital. In step S12, the screen sorting buffer 62 stores the image supplied from the A/D conversion unit 61, and performs sorting from the sequence for displaying the pictures to the sequence for encoding.

In step S13, the computing unit 63 computes difference between an image sorted in step S12 and the prediction image. The prediction image is supplied to the computing unit 63 from the motion prediction/compensation unit 75 in the event of performing inter prediction, and from the intra prediction unit 74 in the event of performing intra prediction, via the prediction image selecting unit 77.

The difference data is smaller in the data amount as compared to the original image data. Accordingly, the data amount can be compressed as compared to the case of encoding the original image without change.

In step S14, the orthogonal transform unit 64 subjects the difference information supplied from the computing unit 63 to orthogonal transform. Specifically, orthogonal transform, such as discrete cosine transform, Karhunen-Loéve transform, or the like, is performed, and a transform coefficient is output. In step S15, the quantization unit 65 quantizes the transform coefficient. At the time of this quantization, a rate is controlled such that later-described processing in step S25 will be described.

The difference information thus quantized is locally decoded as follows. Specifically, in step S16, the inverse quantization unit 68 subjects the transform coefficient quantized by the quantization unit 65 to inverse quantization using a property corresponding to the property of the quantization unit 65. In step S17, the inverse orthogonal transform unit 69 subjects the transform coefficient subjected to inverse quantization by the inverse quantization unit 68 to inverse orthogonal transform using a property corresponding to the property of the orthogonal transform unit 64.

In step S18, the computing unit 70 adds the prediction image input via the prediction image selecting unit 77 to the locally decoded difference information, and generates a locally decoded image (the image corresponding to the input to the computing unit 63). In step S19, the deblocking filter 71 subjects the image output from the computing unit 70 to filtering. Thus, block distortion is removed. In step S20, the frame memory 72 stores the image subjected to filtering. Note that an image not subjected to filtering processing by the deblocking filter 71 is also supplied from the computing unit 70 to the frame memory 72 for storing.

In step S21, the intra prediction unit 74 and motion prediction/compensation unit 75 each perform image prediction processing. Specifically, in step S21, the intra prediction unit 74 performs intra prediction processing in the intra prediction mode. The motion prediction/compensation unit 75 performs motion prediction and compensation processing in the inter prediction mode with 1/8 pixel precision.

At this time, the motion vector precision determining unit 76 generates a precision flag indicating whether the precision of the motion vector information of the current block obtained by the motion prediction/compensation unit 75, and the precision of the motion vector information of an adjacent block adjacent to the current block agree or differ. The motion prediction/compensation unit 75 uses the motion vector information of the adjacent block to calculate the prediction motion vector information of the current block based on the precision flag thereof, and takes difference between the obtained motion vector information and the calculated prediction motion vector information as difference motion vector information to be transmitted to the decoding side.

This precision flag and difference motion vector information are, in the event that the prediction image in the optimal inter prediction mode has been selected, supplied in step S22 to the lossless encoding unit 66 along with information indicating the optimal inter prediction mode and the reference frame information.

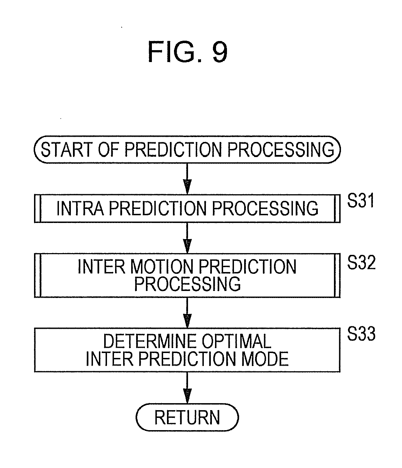

The details of the prediction processing in step S21 will be described later with reference to Fig. 9, but according to this processing, the prediction processes in all of the intra prediction modes serving as candidates are performed, and the cost function values in all of the intra prediction modes serving as candidates are calculated. The optimal intra prediction mode is selected based on the calculated cost function values, and the prediction image generated by the intra prediction in the optimal intra prediction mode, and the cost function value thereof are supplied to the prediction image selecting unit 77.

Also, according to this processing, the prediction processes in all of the inter prediction modes serving as candidates are performed, and the cost function values in all of the inter prediction modes serving as candidates are calculated. The optimal inter prediction mode is determined out of the inter prediction modes based on the calculated cost function values, and the prediction image generated by the inter prediction in the optimal inter prediction mode, and the cost function value thereof are supplied to the prediction image selecting unit 77.

In step S22, the prediction image selecting unit 77 determines one of the optimal intra prediction mode and the optimal inter prediction mode to be the optimal prediction mode based on the cost function values output from the intra prediction unit 74 and the motion prediction/compensation unit 75. The prediction image selecting unit 77 then selects the prediction image in the determined optimal prediction mode, and supplies to the computing units 63 and 70. This prediction image is, as described above, used for calculations in steps S13 and S18.

Note that the selection information of this prediction image is supplied to the intra prediction unit 74 or motion prediction/compensation unit 75. In the event that the prediction image in the optimal intra prediction mode has been selected, the intra prediction unit 74 supplies information indicating the optimal intra prediction mode (i.e., intra prediction mode information) to the lossless encoding unit 66.

In the event that the prediction image in the optimal inter prediction mode has been selected, the motion prediction/compensation unit 75 outputs information indicating the optimal inter prediction mode, and according to need, information according to the optimal inter prediction mode to the lossless encoding unit 66. Examples of the information according to the optimal inter prediction mode include difference motion vector information, precision flag, and reference frame information.

In step S23, the lossless encoding unit 66 encodes the quantized transform coefficient output from the quantization unit 65. Specifically, the difference image is subjected to lossless encoding such as variable length coding, arithmetic coding, or the like, and compressed. At this time, the intra prediction mode information from the intra prediction unit 74, or the information according to the optimal inter prediction mode from the motion prediction/compensation unit 75, and so forth input to the lossless encoding unit 66 in step S22 described above are also encoded, and added to the header information.

In step S24, the accumulating buffer 67 accumulates the difference image as the compressed image. The compressed image accumulated in the accumulating buffer 67 is read out as appropriate, and transmitted to the decoding side via the transmission path.

In step S25, the rate control unit 78 controls the rate of the quantization operation of the quantization unit 65 based on the compressed image accumulated in the accumulating buffer 67 so as not to cause overflow or underflow.

[Description of Prediction Processing]

Next, the prediction processing in step S21 in Fig. 8 will be described with reference to the flowchart in Fig. 9.

In the event that the image to be processed, supplied from the screen sorting buffer 62, is an image in a block to be subjected to intra processing, the decoded image to be referenced is read out from the frame memory 72, and supplied to the intra prediction unit 74 via the switch 73. In step S31, based on these images, the intra prediction unit 74 performs intra prediction as to the pixels in the block to be processed using all of the intra prediction modes serving as candidates. Note that pixels not subjected to deblocking filtering by the deblocking filter 71 are used as the decoded pixels to be referenced.

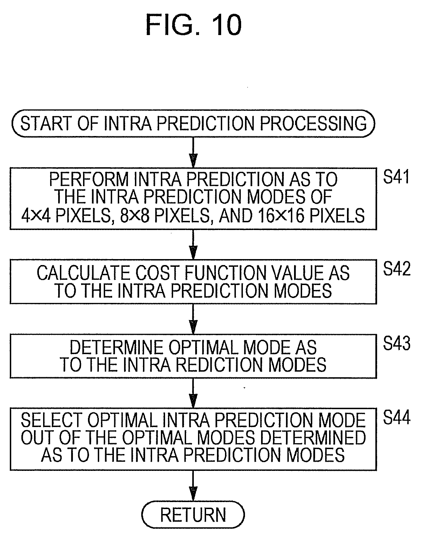

The details of the intra prediction processing in step S31 will be described later with reference to Fig. 10, but according to this processing, intra prediction is performed using all of the intra prediction modes serving as candidates, and a cost function value is calculated as to all of the intra prediction modes serving as candidates. The optimal intra prediction mode is then selected based on the calculated cost function values, and the prediction image generated by the intra prediction in the optimal intra prediction mode, and the cost function value thereof are supplied to the prediction image selecting unit 77.

In the event that the image to be processed supplied from the screen sorting buffer 62 is an image to be subjected to inter processing, the image to be referenced is read out from the frame memory 72, and supplied to the motion prediction/compensation unit 75 via the switch 73. In step S32, based on these images, the motion prediction/compensation unit 75 performs inter motion prediction processing. That is to say, the motion prediction/compensation unit 75 references the image supplied from the frame memory 72 to perform the motion prediction processing in all of the inter prediction modes serving as candidates.

Note that, at this time, the motion vector precision determining unit 76 generates a precision flag indicating whether the precision of the motion vector information of the current block obtained by the motion prediction/compensation unit 75, and the precision of the motion vector information of an adjacent block adjacent to the current block agree or differ. The motion prediction/compensation unit 75 uses the motion vector information of the adjacent block to generate the prediction motion vector information of the current block based on the precision flag thereof, and takes difference between the obtained motion vector information and the generated prediction motion vector information as difference motion vector information to be transmitted to the decoding side.

This precision flag and difference motion vector information are, in the event that the prediction image in the optimal inter prediction mode has been selected in step S22 in Fig. 8, supplied to the lossless encoding unit 66 along with information indicating the optimal inter prediction mode and the reference frame information.

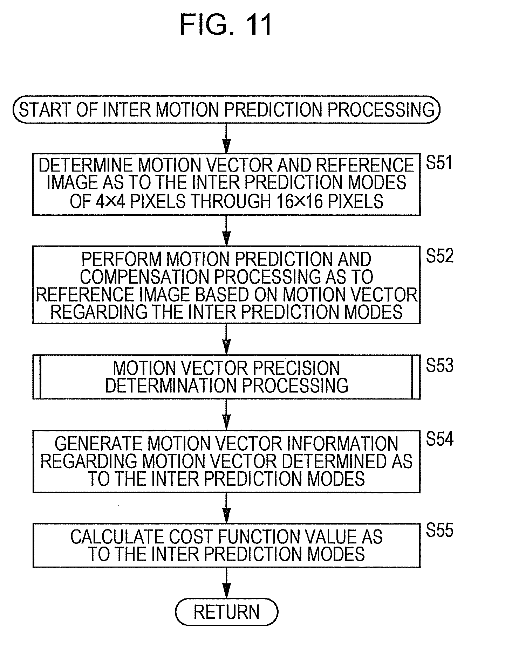

The details of the inter motion prediction processing in step S32 will be described later with reference to Fig. 11, but according to this processing, the motion prediction processing in all of the inter prediction modes serving as candidates is performed, and a cost function value as to all of the inter prediction modes serving as candidates is calculated.

In step S34, the mode determining unit 86 of the motion prediction/compensation unit 75 compares the cost function values as to the inter prediction modes calculated in step S32. The mode determining unit 86 determines the prediction mode that provides the minimum value, to be the optimal inter prediction mode, and supplies the prediction image generated in the optimal inter prediction mode, and the cost function value thereof to the prediction image selecting unit 77.

[Description of Intra Prediction Processing]

Next, the intra prediction processing in step S31 in Fig. 9 will be described with reference to the flowchart in Fig. 10. Note that, with the example in Fig. 10, description will be made regarding a case of a luminance signal as an example.

In step S41, the intra prediction unit 74 performs intra prediction as to the intra prediction modes of 4 × 4 pixels, 8 × 8 pixels, and 16 × 16 pixels.

With regard to intra prediction modes for a luminance signal, there are provided nine kinds of prediction modes in block units of 4 × 4 pixels and 8 × 8 pixels, and in macro block units of 16 × 16 pixels, and with regard to intra prediction modes for a color difference signal, there are provided four kinds of prediction modes in block units of 8 × 8 pixels. The intra prediction modes for color difference signals may be set independently from the intra prediction modes for luminance signals. With regard to the intra prediction modes of 4 × 4 pixels and 8 × 8 pixels of a luminance signal, one intra prediction mode is defined for each luminance signal block of 4 × 4 pixels and 8 × 8 pixels. With regard to the intra prediction mode of 16 × 16 pixels of a luminance signal, and the intra prediction mode of a color difference signal, one prediction mode is defined as to one macro block.

Specifically, the intra prediction unit 74 performs intra prediction as to the pixels in the block to be processed with reference to the decoded image read out from the frame memory 72 and supplied via the switch 73. This intra prediction processing is performed in the intra prediction modes, and accordingly, prediction images in the intra prediction modes are generated. Note that pixels not subjected to deblocking filtering by the deblocking filter 71 are used as the decoded pixels to be referenced.

In step S42, the intra prediction unit 74 calculates a cost function value as to the intra prediction modes of 4 × 4 pixels, 8 × 8 pixels, and 16 × 16 pixels. Here, calculation of a cost function value is performed based on one of the techniques of a High Complexity mode or Low Complexity mode. These modes are determined in JM (Joint Model) that is reference software in the H.264/AVC system.

Specifically, in the High Complexity mode, tentatively, up to encoding processing is performed as to all of the prediction modes serving as candidates as the processing in step S41. A cost function value represented with the following Expression (9) is calculated as to the prediction modes, and a prediction mode that provides the minimum value thereof is selected as the optimal prediction mode.

$$\text{Cost(Mode)} = D + \lambda \cdot R \qquad \ldots \text{(9)}$$

D denotes difference (distortion) between the raw image and a decoded image, R denotes a generated code amount including an orthogonal transform coefficient, and $\lambda$ denotes a LaGrange multiplier to be provided as a function of a quantization parameter QP.

On the other hand, in the Low Complexity mode, a prediction image is generated, and up to header bits of motion vector information, prediction mode information, flag information, and so forth are calculated as to all of the prediction modes serving as candidates as the processing in step S41. A cost function value represented with the following Expression (10) is calculated as to the prediction modes, and a prediction mode that provides the minimum value thereof is selected as the optimal prediction mode.

$$Cost(Mode) = D + QPtoQuant(QP) \cdot Header\_Bit \ . \ . \ . \ (10)$$

D denotes difference (distortion) between the raw image and a decoded image, Header_Bit denotes header bits as to a prediction mode, and QPtoQuant is a function to be provided as a function of the quantization parameter QP.

In the Low Complexity mode, a prediction image is only generated as to all of the prediction modes, and there is no need to perform encoding processing and decoding processing, and accordingly, a calculation amount can be reduced.

In step S43, the intra prediction unit 74 determines the optimal mode as to the intra prediction modes of $4 \times 4$ pixels, $8 \times 8$ pixels, and $16 \times 16$ pixels. Specifically, as described above, in the event of the intra $4 \times 4$ prediction mode and intra $8 \times 8$ prediction mode, the number of prediction mode types is nine, and in the event of the intra $16 \times 16$ prediction mode, the number of prediction mode types is four. Accordingly, the intra prediction unit 74 determines, based on the cost function values calculated in step S42, the optimal intra $4 \times 4$ prediction mode, optimal intra $8 \times 8$ prediction mode, and optimal intra $16 \times 16$ prediction mode out thereof.

In step S44, the intra prediction unit 74 selects the optimal intra prediction mode out of the optimal modes determined as to the intra prediction modes of $4 \times 4$ pixels, $8 \times 8$ pixels, and $16 \times 16$ pixels based on the cost function values calculated in step S42. Specifically, the intra prediction unit 74 selects a mode of which the cost function value is the minimum value out of the optimal modes determined as to $4 \times 4$ pixels, $8 \times 8$ pixels, and $16 \times 16$ pixels, as the optimal intra prediction mode. The intra prediction unit 74 then supplies the prediction image generated in the optimal intra prediction mode, and the cost function value thereof to the prediction image selecting unit 77.

[Description of Inter Motion Prediction Processing]

Next, the inter motion prediction processing in step S32 in Fig. 9 will be described with reference to the flowchart in Fig. 11.

In step S51, the motion prediction/compensation unit 75 determines a motion vector and a reference image as to each of the eight kinds of the inter prediction modes made up of $16 \times 16$ pixels through $4 \times 4$ pixels described above with reference to Fig. 2. That is to say, a motion vector and a reference image are determined as to the block to be processed in each of the inter prediction modes.

In step S52, the motion prediction/compensation unit 75 subjects the reference image to motion prediction and compensation processing based on the motion vector determined in step S51 regarding each of the eight kinds of the inter prediction modes made up of $16 \times 16$ pixels through $4 \times 4$ pixels. According to this motion prediction and compensation processing, a prediction image in each of the inter prediction modes is generated.

Specifically, the above-mentioned processing in steps S51 and S52 is performed with integer pixel precision as to the current block of each inter prediction mode by the integer pixel precision motion prediction/compensation unit 81, and performed with 1/8 pixel precision by the fractional pixel precision motion prediction/compensation unit 82.

First, the integer pixel precision motion prediction/compensation unit 81 performs motion prediction and compensation processing with integer pixel precision of the current block regarding all of the inter prediction modes serving as candidates. At this time, the obtained motion vector information with integer pixel precision of the current block is supplied to the fractional pixel precision motion prediction/compensation unit 82 along with an image to be subjected to inter processing and a reference image. In response to this, the fractional pixel precision motion prediction/compensation unit 82 uses the image to be subjected to inter processing and the reference image to perform motion prediction and compensation processing with fractional pixel precision of the current block based on the motion vector information with integer pixel precision.

The obtained motion vector information is accumulated in the motion vector information accumulating buffer 83, and also supplied to the motion vector information encoding unit 85 and current motion vector precision determining unit 91. Also, according to the compensation processing with fractional pixel precision, the obtained prediction image is supplied to the mode determining unit 86 along with the raw image and the reference frame information.

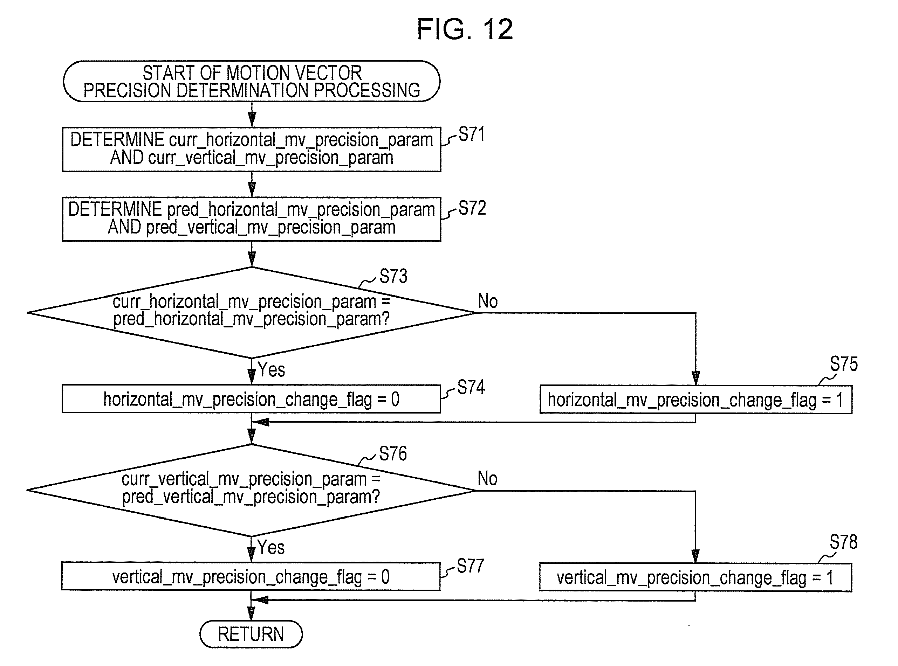

Upon the motion vector information of the current block being supplied from the fractional pixel precision motion prediction/compensation unit 82, in step S53 the motion vector precision determining unit 76 executes motion vector precision determination processing. This motion vector precision determination processing will be described later with reference to Fig. 12.

According to the motion vector precision determination processing in step S53, a precision flag indicating whether the precision of the motion vector information of the current block, and the precision of the motion vector information of an adjacent block agree or differ is generated. The generated precision flag is supplied to the prediction motion vector calculating unit 84 and motion vector information encoding unit 85.

In step S54, the prediction motion vector calculating unit 84 and motion vector information encoding unit 85 generate difference motion vector information $mvd_E$ regarding the motion vector determined as to each of the eight kinds of inter prediction modes made up of 16 × 16 pixels through 4 × 4 pixels. At this time, the motion vector generating method described above with reference to Fig. 5 is used.

Specifically, the prediction motion vector calculating unit 84 uses the adjacent block motion vector information to calculate prediction motion vector information $pmv_E$ as to the current block E by the median prediction in the above-mentioned Expression (5). The motion vector information encoding unit 85 obtains, as shown in the above-mentioned Expression (6), difference motion vector information $mvd_E$ using difference between the motion vector information $mv_E$ from the fractional pixel precision motion prediction/compensation unit 82, and the calculated prediction motion vector information $pmv_E$.

Note that, at the time of performing calculation of prediction motion vector information, for example, the precision of the motion vector information in the adjacent blocks A, B, C, and D shown in Fig. 5 may be mixed with 1/4 pixel precision and 1/8 pixel precision. For example, the motion vector information $mv_E$ of the current block E is 1/8 pixel precision regarding each of the horizontal and vertical components, but in the event that the motion vector information $mv_X$ in the adjacent block X = A, B, C, D is 1/4 pixel precision, median prediction is performed like the following Expression (11).

$$mv_X = mv_X * 2 \qquad . . . (11)$$

That is to say, in this case, the motion vector information of the adjacent block is converted into 1/8 pixel precision, and median prediction is performed.

Conversely, the motion vector information $mv_E$ of the current block E is 1/4 pixel precision regarding each of the horizontal and vertical components, but in the event that the motion vector information $mv_X$ in the adjacent block X = A, B, C, D is 1/8 pixel precision, median prediction is performed like the following Expression (12).

$$mv_X = mv_X / 2 \qquad . . . (12)$$

That is to say, in this case, the motion vector information of the adjacent block is converted into 1/4 pixel precision, and median prediction is performed.

The obtained difference motion vector information is supplied to the mode determining unit 86 along with the precision flag. This difference motion vector information is also used at the time of calculation of a cost function value in the next step S54. In the event that the corresponding prediction image has ultimately been selected by the prediction image selecting unit 77, the difference motion vector information is output to the lossless encoding unit 66 along with the precision flag, prediction mode information, and reference frame information.

In step S54, the mode determining unit 86 calculates the cost function value indicated in the above-mentioned Expression (9) or Expression (10) as to each of the eight kinds of the inter prediction modes made up of 16 × 16 pixels through 4 × 4 pixels.

Specifically, the prediction image, raw image, and reference frame information from the fractional pixel precision motion prediction/compensation unit 82, the difference motion vector information $mvd_E$ and precision flag from the motion vector information encoding unit 85, and so forth are supplied to the mode determining unit 86. The mode determining unit 86 uses the supplied information as appropriate to calculate a cost function value as to all of the inter prediction modes serving as candidates. The cost function values calculated here are used at the time of determining the optimal inter prediction mode in the above-mentioned step S34 in Fig. 8.

[Description of Motion Vector Precision Determination Processing]

Next, the motion vector precision determination processing in step S53 in Fig. 11 will be described with reference to the flowchart in Fig. 12.

In step S71, the current motion vector precision determining unit 91 determines curr_horizontal_mv_precision_param and curr_vertical_mv_precision_param. Specifically, the motion vector information of the current block is supplied from the fractional pixel precision motion prediction/compensation unit 82 to the current motion vector precision determining unit 91. The current motion vector precision determining unit 91 distinguishes the precision of the motion vector information of the current block, and in step S71 determines the precision parameter for horizontal components and the precision parameter for vertical components as to the motion vector information of the current block. The determined curr_horizontal_mv_precision_param and

curr_vertical_mv_precision_param are supplied to the precision flag generating unit 93.

In step S72, the adjacent motion vector precision determining unit 92 determines pred_horizontal_mv_precision__param and

pred_vertical_mv_precision_param. Specifically, the adjacent motion vector precision determining unit 92 reads out the motion vector information of the adjacent block from the motion vector information accumulating buffer 83. The adjacent motion vector precision determining unit 92 distinguishes the precision of the motion vector information of the adjacent block, and in step S72 determines the precision parameter for horizontal components and the precision parameter for vertical components as to the motion vector information of the adjacent block. The determined pred_horizontal_mv_ precision_param and

pred_vertical_mv_precision_param are supplied to the precision flag generating unit 93.

In step S73, the precision flag generating unit 93 determines whether or not the curr_horizontal_mv_precision_param and

pred_horizontal_mv_precision_param agree.

In the event that determination is made in step S73 that the curr_horizontal_mv_precision_param and pred_ horizontal_mv_precision_param agree, the processing proceeds to step S74. In step S74, the precision flag generating unit 93 sets the value of the precision flag for the horizontal components of the current block (horizontal_mv_precision_ change_flag) to 0. In other words, the precision flag for the horizontal components of the current block of which the value is 0 is generated.

In the event that determination is made in step S73 that the curr_horizontal_mv_precision_param and pred_ horizontal_mv_precision_param differ, the processing proceeds to step S75. In step S75, the precision flag generating unit 93 sets the value of the precision flag for the horizontal components of the current block (horizontal_mv_precision_ change_flag) to 1. In other words, the precision flag for the horizontal components of the current block of which the value is 1 is generated.

In step S76, the precision flag generating unit 93 determines whether or not the curr_vertical_mv_precision_param and

pred_vertical_mv_precision_param agree.

In the event that determination is made in step S76 that the curr_verical_mv_precision_param and pred_ vertical_mv_precision_param agree, the processing proceeds to step S77. In step S77, the precision flag generating unit 93 sets the value of the precision flag for the vertical components of the current block (vertical_mv_precision_change flag) to 0. In other words, the precision flag for the vertical components of the current block of which the value is 0 is generated.

In the event that determination is made in step S76 that the curr_vertical_mv_precision_param and pred_ vertical_mv_precision_param differ, the processing proceeds to step S78. In step S78, the precision flag generating unit 93 sets the value of the precision flag for the vertical components of the current block (vertical_mv_precision_change_ flag) to 1. In other words, the precision flag for the vertical components of the current block of which the value is 1 is generated.

The generated precision flags for the horizontal components and vertical components of the current block are supplied to the prediction motion vector calculating unit 84 and motion vector information encoding unit 85. In the event of the prediction image in the optimal inter prediction mode being selected in step S22 in Fig. 8, the precision flags are supplied to the lossless encoding unit 66 along with the difference motion vector information, information indicating optimal inter prediction mode, and reference frame information, encoded and transmitted to the decoding side.

As described above, an arrangement has been made wherein a precision flag indicating whether the precision of the motion vector information of the current block, and the precision of the motion vector information of the adjacent block thereof agree or differ is added to the header of the compressed image, and transmitted to the decoding side for each current block.

That is to say, with the present invention, a precision flag is defined regarding each of the motion prediction blocks within the compressed image information.

Thus, motion vector information can be transmitted with 1/8 pixel precision only when necessary instead of constantly transmitting motion vector information with 1/8 pixel precision. In other words, motion vector information can be transmitted with 1/4 pixel precision when unnecessary. As a result thereof, there is no need to assign much more code amount to all of the motion vector information, whereby motion prediction efficiency can be improved without increasing the motion vector information.

Note that, in the event that the current block is the block B, a series of processing is performed as to each of the List0 and List1.

Also, as described above with reference to Fig. 5 or Fig. 6, the current block is in the direct mode or skip mode, the precision flags are not transmitted to the decoding side with assuming that the values of the precision flags (horizontal_ mv_precision_change_flag, vertical_mv_precision_change_flag) are 0.

The encoded compressed image is transmitted via a predetermined transmission path, and decoded by the image decoding device.

[Configuration Example of Image Decoding Device]

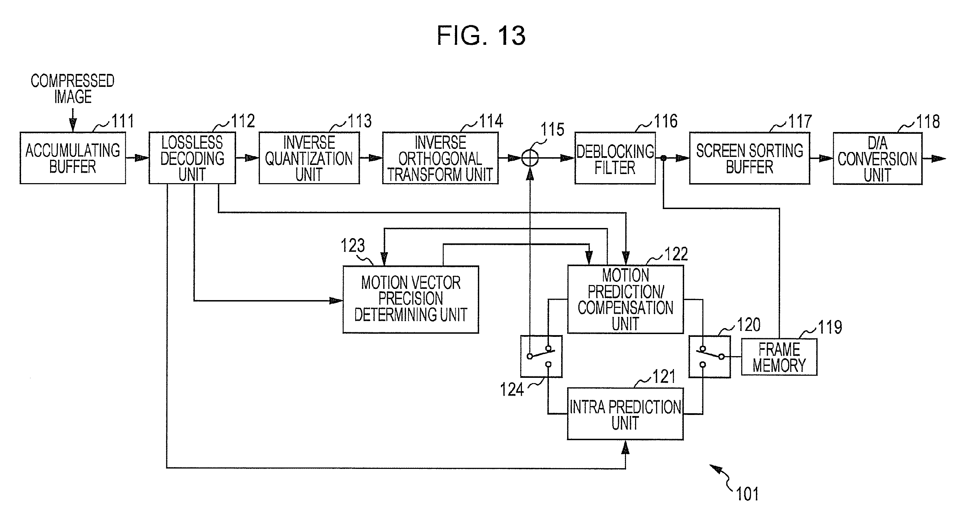

Fig. 13 represents the configuration of an embodiment of an image decoding device serving as the image processing device to which has been applied.

An image decoding device 101 is configured of an accumulating buffer 111, a lossless decoding unit 112, an inverse quantization unit 113, an inverse orthogonal transform unit 114, a computing unit 115, a deblocking filter 116, a screen sorting buffer 117, a D/A conversion unit 118, frame memory 119, a switch 120, an intra prediction unit 121, a motion prediction/compensation unit 122, a motion vector precision determining unit 123, and a switch 124.

The accumulating buffer 111 accumulates a transmitted compressed image. The lossless decoding unit 112 decodes information supplied from the accumulating buffer 111 and encoded by the lossless encoding unit 66 in Fig. 1 using a system corresponding to the encoding system of the lossless encoding unit 66. The inverse quantization unit 113 subjects the image decoded by the lossless decoding unit 112 to inverse quantization using a system corresponding to the quantization system of the quantization unit 65 in Fig. 1. The inverse orthogonal transform unit 114 subjects the output of the inverse quantization unit 113 to inverse orthogonal transform using a system corresponding to the orthogonal transform system of the orthogonal transform unit 64 in Fig. 1.

The output subject to inverse orthogonal transform is decoded by being added with the prediction image supplied from the switch 124 by the computing unit 115. The deblocking filter 116 removes the block distortion of the decoded image, then supplies to the frame memory 119 for accumulation, and also outputs to the screen sorting buffer 117.

The screen sorting buffer 117 performs sorting of images. Specifically, the sequence of frames sorted for encoding sequence by the screen sorting buffer 62 in Fig. 1 is resorted in the original display sequence. The D/A conversion unit 118 converts the image supplied from the screen sorting buffer 117 from digital to analog, and outputs to an unshown display for display.

The switch 120 reads out an image to be subjected to inter processing and an image to be referenced from the frame memory 119, outputs to the motion prediction/compensation unit 122, and also reads out an image to be used for intra prediction from the frame memory 119, and supplies to the intra prediction unit 121.

Information indicating the intra prediction mode obtained by decoding the header information is supplied from the lossless decoding unit 112 to the intra prediction unit 121. The intra prediction unit 121 generates, based on this information, a prediction image, and outputs the generated prediction image to the switch 124.

Of the information obtained by decoding the header information, the prediction mode information, difference motion vector information, reference frame information, and so forth are supplied from the lossless decoding unit 112 to the motion prediction/compensation unit 122. In the event that information indicating the inter prediction mode has been supplied, the motion prediction/compensation unit 122 references the precision parameters for the motion vector information of the current block from the motion vector precision determining unit 123, and uses the decoded difference motion vector information to restructure the motion vector information.

Specifically, the motion prediction/compensation unit 122 references the precision parameters for the motion vector information of the current block from the motion vector precision determining unit 123 to generate the prediction motion vector information of the current block from the motion vector information of an adjacent block. The motion prediction/compensation unit 122 restructures the motion vector information of the current block from the difference motion vector information, the precision parameters for the motion vector information of the current block, and the prediction motion vector information of the current block from the lossless decoding unit 112.

The motion prediction/compensation unit 122 then subjects the image to compensation processing based on the reference image in the frame memory 119 that the reference frame information indicates, and the restructured motion vector information to generate a prediction image. The generated prediction image is output to the switch 124.

Of the information obtained by decoding the header information, the precision flag is supplied from the lossless decoding unit 112 to the motion vector precision determining unit 123. The motion vector precision determining unit 123 determines the precision parameters for the motion vector information of the current block from the precision flags from the lossless decoding unit 112, and the precision of the motion vector information of the adjacent block from the motion prediction/compensation unit 122. The determined precision parameters for the motion vector information of the current block are supplied to the motion prediction/compensation unit 122.

The switch 124 selects the prediction image generated by the motion prediction/compensation unit 122 or intra prediction unit 121, and supplies to the computing unit 115.

[Configuration Example of Motion

Prediction/Compensation Unit, and Motion Vector Precision Determining Unit]

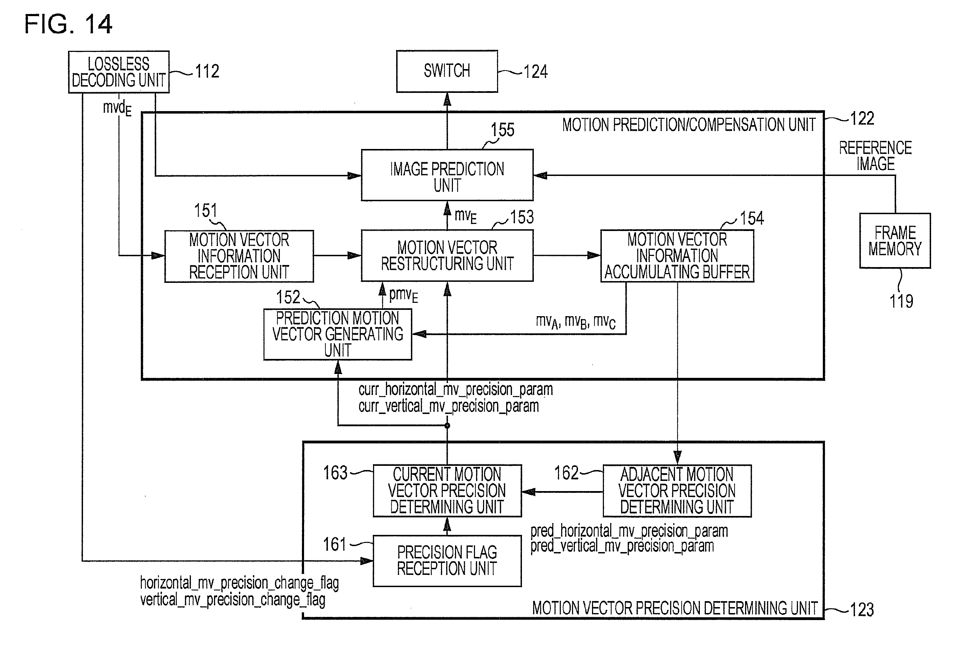

Fig. 14 is a block diagram illustrating a detailed configuration example of the motion prediction/compensation unit, and motion vector precision determining unit. Note that each of the details will be described with reference to the above-mentioned current block E, and adjacent blocks A through D in Fig. 5 as appropriate.

With the example in Fig. 14, the motion prediction/compensation unit 122 is configured of a motion vector information reception unit 151, a prediction motion vector generating unit 152, a motion vector restructuring unit 153, a motion vector information accumulating buffer 154, and an image prediction unit 155.

The motion vector precision determining unit 123 is configured of a precision flag reception unit 161, an adjacent motion vector precision determining unit 162, and a current motion vector precision determining unit 163.

The motion vector information reception unit 151 receives the difference motion vector information $mvd_E$ of the current block E from the lossless decoding unit 112 (i.e., image encoding device 51), and supplies the received difference motion vector information $mvd_E$ to the motion vector restructuring unit 153.

The precision parameters regarding the horizontal components and vertical components as to the motion vector of the current block E from the current motion vector precision determining unit 163 (curr_horizontal_mv_precision_param, curr_vertical_mv_precision_param) are supplied to the prediction motion vector generating unit 152. The prediction motion vector generating unit 152 reads out the motion vector information $mv_A$, $mv_B$, and $mv_C$ of the adjacent blocks from the motion vector information accumulating buffer 154.

The prediction motion vector generating unit 152 references the precision parameters for the motion vector of the current block E, and uses the motion vector information $mv_A$, $mv_B$, and $mv_C$ of the adjacent blocks to generate the prediction motion vector information $pmv_E$ of the current block E by the median prediction in the above-mentioned Expression (5). The generated prediction motion vector information $pmv_E$ is supplied to the motion vector restructuring unit 153.

The difference motion vector information $mvd_E$ from the motion vector information reception unit 151, and the prediction motion vector information $pmv_E$ from the prediction motion vector generating unit 152 have been supplied to the motion vector restructuring unit 153. Further, the precision parameters for the motion vector of the current block E from the current motion vector precision determining unit 163 has been supplied to the motion vector restructuring unit 153.

The motion vector restructuring unit 153 references the precision parameters for the motion vector of the current block E to convert the difference motion vector information $mvd_E$ from the value on the processing to an actual value. The motion vector restructuring unit 153 restructures the motion vector information $mv_E$ of the current block E by adding the prediction motion vector information $pmv_E$ from the prediction motion vector generating unit 152 to the converted difference motion vector information $mvd_E$. The restructured motion vector information $mv_E$ of the current block E is accumulated in the motion vector information accumulating buffer 154, and also output to the image prediction unit 155.

The motion vector information accumulating buffer 154 accumulates the motion vector information $mv_X$ (X = A, B, C, D, E) restructured by the motion vector restructuring unit 153.

The image prediction unit 155 reads out the reference image that the reference frame information from the lossless decoding unit 112 indicates from the frame memory 119 via the switch 120. The image prediction unit 155 subjects the reference image to compensation processing based on the motion vector information $mv_E$ of the current block E restructured by the motion vector restructuring unit 153 to generate the prediction image of the current block E. The generated prediction image is output to the switch 124.

The precision flag reception unit 161 receives the precision flags for the horizontal components and vertical components as to the motion vector information of the current block E (horizontal_mv_precision_change_flag, vertical_ mv_precision_change flag) from the lossless decoding unit 112. The received precision flags for the horizontal components and vertical components as to the motion vector information of the current block E are supplied to the current motion vector precision determining unit 163.

The adjacent motion vector precision determining unit 162 reads out adjacent motion vector information from the motion vector information accumulating buffer 154, and distinguishes the precision of the motion vector information of the adjacent block. The adjacent motion vector precision determining unit 162 then determines precision parameters regarding the horizontal components and vertical components as to the motion vector information of the adjacent block (pred_horizontal_mv_precision_param, pred_vertical_mv_precision_param). The determined precision parameters for the motion vector information of the adjacent block are supplied to the current motion vector precision determining unit 163.

Note that the adjacent block is a block that may provide a prediction value (prediction motion vector information) $pmv_E$ as to the motion vector information $mv_E$ of the current block E, and is defined by the first through third methods described above with reference to Fig. 7.

The precision flags for the horizontal and vertical components as to the motion vector information of the current block E from the luminance flag reception unit 161, and the precision parameters for the motion vector information of the adjacent block from the adjacent motion vector precision determining unit 162 are supplied to the current motion vector precision determining unit 163.

The current motion vector precision determining unit 163 distinguishes the precision of the motion vector information of the current block E from the precision flags for the horizontal and vertical components as to the motion vector information of the current block E, and the precision parameters for the motion vector information of the adjacent block. The current motion vector precision determining unit 163 then determines precision parameters regarding the horizontal components and vertical components as to the motion vector information of the current block E (curr_horizontal_mv_precision_param, curr_vertical_mv_precision_param). The determined precision parameters for the motion vector information of the current block E are supplied to the prediction motion vector generating unit 152 and motion vector restructuring unit 153.

[Description of Decoding Processing of Image Decoding Device]

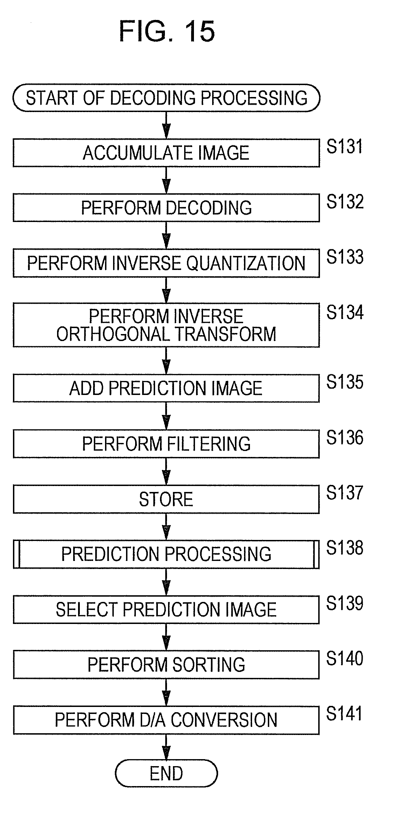

Next, the decoding processing that the image decoding device 101 executes will be described with reference to the flowchart in Fig. 15.

In step S131, the accumulating buffer 111 accumulates the transmitted image. In step S132, the lossless decoding unit 112 decodes the compressed image supplied from the accumulating buffer 111. Specifically, the I picture, P picture, and B picture encoded by the lossless encoding unit 66 in Fig. 1 are decoded.

At this time, the difference motion vector information, reference frame information, prediction mode information (information indicating the intra prediction mode or inter prediction mode), and precision flags are also decoded.

Specifically, in the event that the prediction mode information is intra prediction mode information, the prediction mode information is supplied to the intra prediction unit 121. In the event that the prediction mode information is inter prediction mode information, the difference motion vector information and reference frame information corresponding to the prediction mode information are supplied to the motion prediction/compensation unit 122. Also, in this case, the precision flags are supplied to the motion vector precision determining unit 123.

In step S133, the inverse quantization unit 113 inversely quantizes the transform coefficient decoded by the lossless decoding unit 112 using a property corresponding to the property of the quantization unit 65 in Fig. 1. In step S134, the inverse orthogonal transform unit 114 subjects the transform coefficient inversely quantized by the inverse quantization unit 113 to inverse orthogonal transform using a property corresponding to the property of the orthogonal transform unit 64 in Fig. 1. This means that difference information corresponding to the input of the orthogonal transform unit 64 in Fig. 1 (the output of the computing unit 63) has been decoded.

In step S135, the computing unit 115 adds the prediction image selected in the processing in later-described step S141 and input via the switch 124, to the difference information. Thus, the original image is decoded. In step S136, the deblocking filter 116 subjects the image output from the computing unit 115 to filtering. Thus, block distortion is removed. In step S137, the frame memory 119 stores the image subjected to filtering.

In step S138, the intra prediction unit 121 or motion prediction/compensation unit 122 performs the corresponding image prediction processing in response to the prediction mode information supplied from the lossless decoding unit 112.

Specifically, in the event that the intra prediction mode information has been supplied from the lossless decoding unit 112, the intra prediction unit 121 performs the intra prediction processing in the intra prediction mode. In the event that the inter prediction mode information has been supplied from the lossless decoding unit 112, the motion prediction/compensation unit 122 performs the motion prediction and compensation processing in the inter prediction mode. At this time, the motion prediction/compensation unit 122 references the precision parameters for the motion vector information of the current block from the motion vector precision determining unit 123, and uses the difference motion vector information from the lossless decoding unit 112 to restructure the motion vector information of the current block.

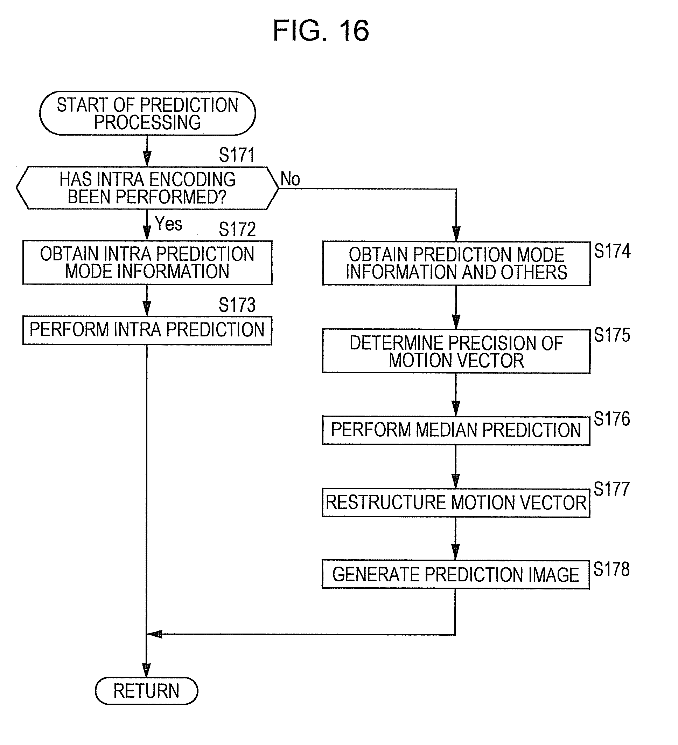

The details of the prediction processing in step S138 will be described later with reference to Fig. 16, but according to this processing, the prediction image generated by the intra prediction unit 121 or the prediction image generated by the motion prediction/compensation unit 122 is supplied to the switch 124.

In step S139, the switch 124 selects the prediction image. Specifically, the prediction image generated by the intra prediction unit 121 or the prediction image generated by the motion prediction/compensation unit 122 is supplied. Accordingly, the supplied prediction image is selected, supplied to the computing unit 115, and in step S134, as described above, added to the output of the inverse orthogonal transform unit 114.

In step S140, the screen sorting buffer 117 performs sorting. Specifically, the sequence of frames sorted for encoding by the screen sorting buffer 62 of the image encoding device 51 is sorted in the original display sequence.

In step S141, the D/A conversion unit 118 converts the image from the screen sorting buffer 117 from digital to analog. This image is output to an unshown display, and the image is displayed.

[Description of Prediction Processing of Image Decoding Device]

Next, the prediction processing in step S138 in Fig. 15 will be described with reference to the flowchart in Fig. 16.

In step S171, the intra prediction unit 121 determines whether or not the current block has been subjected to intra encoding. Upon the intra prediction mode information being supplied from the lossless decoding unit 112 to the intra prediction unit 121, in step S171 the intra prediction unit 121 determines that the current block has been subjected to intra encoding, and the processing proceeds to step S172.

In step S172, the intra prediction unit 121 obtains the intra prediction mode information, and in step S173 performs intra prediction.

Specifically, in the event that the image to be processed is an image to be subjected to intra processing, the necessary image is read out from the frame memory 119, and supplied to the intra prediction unit 121 via the switch 120. In step S173, the intra prediction unit 121 performs intra prediction in accordance with the intra prediction mode information obtained in step S172 to generate a prediction image. The generated prediction image is output to the switch 124.

On the other hand, in the event that determination is made in step S171 that intra encoding has not been performed, the processing proceeds to step S174.

In step S174, the motion prediction/compensation unit 122 obtains the prediction mode information and so forth from the lossless decoding unit 112.

In the event that the image to be processed is an image to be subjected to inter processing, the inter prediction mode information, reference frame information, and difference motion vector information are supplied from the lossless decoding unit 112 to the motion prediction/compensation unit 122. In this case, in step S174, the motion prediction/ compensation unit 122 obtains the inter prediction mode information, reference frame information, and difference motion vector information.

Note that, at this time, the precision flag reception unit 161 receives and obtains the precision flags. The received precision flags for the horizontal and vertical components as to the motion vector information of the current block are supplied to the current motion vector precision determining unit 163. Also, the adjacent motion vector precision determining unit 162 determines the precision parameters for the motion vector information of the adjacent block based on the adjacent motion vector information from the motion vector information accumulating buffer 154, and supplies to the current motion vector precision determining unit 163.

In step S175, the current motion vector precision determining unit 163 determines the precision of the motion vector information of the current block from the precision flags for the horizontal and vertical components as to the motion vector information of the current block, and the precision parameters for the motion vector information of the adjacent block. The determined precision parameters for the motion vector information of the current block are supplied to the prediction motion vector generating unit 152 and motion vector restructuring unit 153.

Upon the precision parameters for the motion vector information of the current block being supplied from the current motion vector precision determining unit 163, in step S176 the prediction motion vector generating unit 152 performs the median prediction described above with reference to Fig. 5.

Specifically, the prediction motion vector generating unit 152 reads out the motion vector information $mv_A$, $mv_B$, and $mv_C$ of the adjacent blocks from the motion vector information accumulating buffer 154, and generates the prediction motion vector information $pmv_E$ of the current block by the median prediction in the above-mentioned Expression (5). At this time, the precision parameters for the motion vector of the current block are referenced. Specifically, in the event that the precision of the motion vector information of the current block that the precision parameters indicate, and the precision of the motion vector information of the adjacent block used for generation of prediction motion vector information differ, the precision of the motion vector information of the adjacent block is converted into the precision of the motion vector information of the current block.

The prediction motion vector information $pmv_E$ of the current block generated by the prediction motion vector generating unit 152 is supplied to the motion vector restructuring unit 153.

In step S177, the motion vector restructuring unit 153 uses the difference motion vector information $mvd_E$ from the motion vector information reception unit 151 to restructure the motion vector information of the current block. That is to say, the difference motion vector information $mvd_E$ from the motion vector information reception unit 151, and the prediction motion vector information $pmv_E$ from the prediction motion vector generating unit 152 have been supplied to the motion vector restructuring unit 153. Further, the precision parameters for the motion vector of the current block from the current motion vector precision determining unit 163 have been supplied to the motion vector restructuring unit 153.

The motion vector restructuring unit 153 references the precision parameters for the motion vector of the current block to convert the value of the difference motion vector information $mvd_E$ from the value on the processing to an actual value. The motion vector restructuring unit 153 adds the prediction motion vector information $pmv_E$ from the prediction motion vector generating unit 152 to the difference motion vector information $mvd_E$ of which the value has been converted. Thus, the motion vector information $mv_E$ of the current block has been restructured. The restructured motion vector information $mv_E$ is accumulated in the motion vector information accumulating buffer 154, and also output to the image prediction unit 155.

In step S178, the image prediction unit 155 generates the prediction image of the current block. Specifically, the image prediction unit 155 reads out the reference image that the reference frame information from the lossless encoding unit 112 indicates from the frame memory 119 via the switch 120. The image prediction unit 155 subjects the reference image to compensation processing based on the motion vector information $mv_E$ restructured by the motion vector restructuring unit 153 to generate the prediction image of the current block. The generated prediction image is output to the switch 124.

As described above, an arrangement has been made wherein the precision flags indicating whether the precision of the motion vector information of the current block, and the precision of the motion vector information of the adjacent block thereof agree or differ are added to the header of the compressed image, and the compressed image is transmitted to the decoding side, for each current block. Thus, the motion vector information can be transmitted with 1/8 pixel precision only when necessary instead of constantly transmitting the motion vector information with 1/8 pixel precision. As a result thereof, motion prediction efficiency can be improved without increasing the motion vector information.

In other words, motion prediction and compensation with 1/8 pixel precision can be performed without causing increase in compressed information, and accordingly, prediction precision can be improved.

Note that description has been made so far regarding an example whether the precision is up to 1/4 pixel precision or 1/8 pixel precision, but the precision is not restricted to this example.

Specifically, the present invention may be applied to every case for performing motion prediction and compensation with fractional pixel precision such as between integer pixel precision and 1/2 pixel precision, and between 1/2 pixel precision and 1/4 pixel precision. Also, the present invention may also be applied to a case where processing is performed with three stages or more such as integer pixel precision, 1/2 pixel precision, and 1/4 pixel precision.

Also, description has been made so far regarding a case where the size of a macro blocks is $16 \times 16$ pixels, but the present invention may be applied to an extended macro block size described in "Video Coding Using Extended Block Sizes", VCEG-AD09, ITU-Telecommunications Standardization Sector STUDY GROUP Question 16 - Contribution 123, Jan 2009.

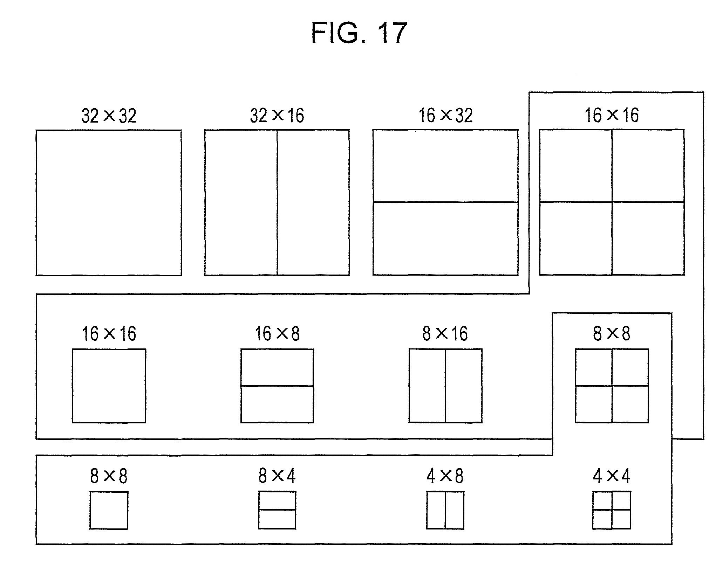

Fig. 17 is a diagram illustrating an example of an extended macro block size. With the above-mentioned proposal, the macro block size is extended up to $32 \times 32$ pixels.

Macro blocks made up of $32 \times 32$ pixels divided into blocks (partitions) of $32 \times 32$ pixels, $32 \times 16$ pixels, $16 \times 32$ pixels, and $16 \times 16$ pixels are shown from the left in order on the upper tier in Fig. 17. Blocks made up of $16 \times 16$ pixels divided into blocks of $16 \times 16$ pixels, $16 \times 8$ pixels, $8 \times 16$ pixels, and $8 \times 8$ pixels are shown from the left in order on the middle tier in Fig. 17. Also, blocks made up of $8 \times 8$ pixels divided into blocks of $8 \times 8$ pixels, $8 \times 4$ pixels, $4 \times 8$ pixels, and $4 \times 4$ pixels are shown from the left in order on the lower tier in Fig. 17.

In other words, the macro blocks of $32 \times 32$ pixels may be processed with blocks of $32 \times 32$ pixels, $32 \times 16$ pixels, $16 \times 32$ pixels, and $16 \times 16$ pixels shown on the upper tier in Fig. 17.

Also, the blocks of $16 \times 16$ pixels shown on the right side on the upper tier may be processed with blocks of $16 \times 16$ pixels, $16 \times 8$ pixels, $8 \times 16$ pixels, and $8 \times 8$ pixels shown on the middle tier in the same way as with the H.264/AVC system.

Further, the blocks of $8 \times 8$ pixels shown on the right side on the middle tier may be processed with blocks of $8 \times 8$ pixels, $8 \times 4$ pixels, $4 \times 8$ pixels, and $4 \times 4$ pixels shown on the lower tier in the same way as with the H.264/AVC system.

With the extended macro block sizes, by employing such a hierarchical structure, regarding a $16 \times 16$-pixel block or less, a greater block is defined as a superset thereof while maintaining compatibility with the H.264/AVC system.

The present invention may also be applied to the proposed macro block sizes extended as described above.

Description has been made so far with the H.264/AVC system employed as a coding system, but another coding system/decoding system may be employed.

Note that the present invention may be applied to an image encoding device and an image decoding device used at the time of receiving image information (bit streams) compressed by orthogonal transform such as discrete cosine transform or the like and motion compensation via a network medium such as satellite broadcasting, a cable television, the Internet, a cellular phone, or the like, for example, as with MPEG, H.26x, or the like. Also, the present invention may be applied to an image encoding device and an image decoding device used at the time of processing image information on storage media such as an optical disc, a magnetic disk, and flash memory. Further, the present invention may be applied to a motion prediction compensation device included in such an image encoding device and an image decoding device and so forth.

The above-mentioned series of processing may be executed by hardware, or may be executed by software. In the event of executing the series of processing by software, a program making up the software thereof is installed in a computer. Here, examples of the computer include a computer built into dedicated hardware, and a general-purpose personal computer whereby various functions can be executed by various types of programs being installed thereto.

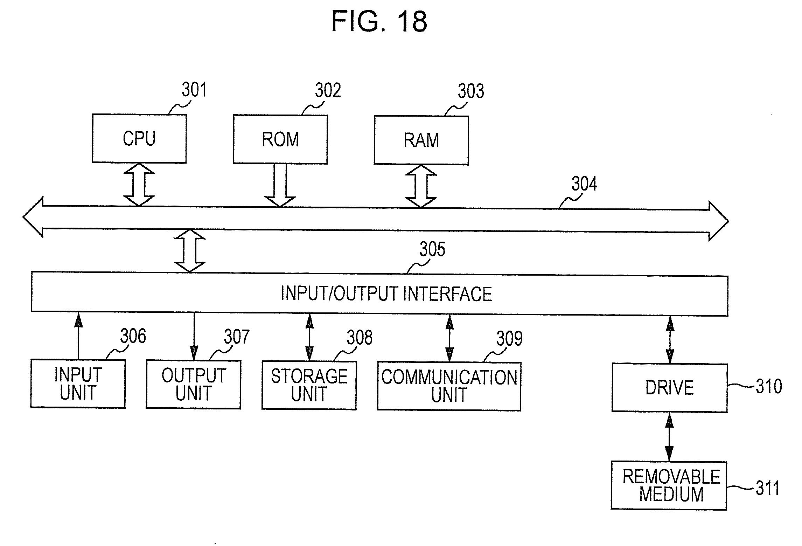

Fig. 18 is a block diagram illustrating a configuration example of the hardware of a computer which executes the above-mentioned series of processing using a program.

With the computer, a CPU (Central Processing Unit) 301, ROM (Read Only Memory) 302, and RAM (Random Access Memory) 303 are mutually connected by a bus 304.

Further, an input/output interface 305 is connected to the bus 304. An input unit 306, an output unit 307, a storage unit 308, a communication unit 309, and a drive 310 are connected to the input/output interface 305.

The input unit 306 is made up of a keyboard, a mouse, a microphone, and so forth. The output unit 307 is made up of a display, a speaker, and so forth. The storage unit 308 is made up of a hard disk, nonvolatile memory, and so forth. The communication unit 309 is made up of a network interface and so forth. The drive 310 drives a removable medium 311 such as a magnetic disk, an optical disc, a magneto-optical disk, semiconductor memory, or the like.

With the computer thus configured, for example, the CPU 301 loads a program stored in the storage unit 308 to the RAM 303 via the input/output interface 305 and bus 304, and executes the program, and accordingly, the above-mentioned series of processing is performed.

The program that the computer (CPU 301) executes may be provided by being recorded in the removable medium 311 serving as a package medium or the like, for example. Also, the program may be provided via a cable or wireless transmission medium such as a local area network, the Internet, or digital broadcasting.

With the computer, the program may be installed in the storage unit 308 via the input/output interface 305 by mounting the removable medium 311 on the drive 310. Also, the program may be received by the communication unit 309 via a cable or wireless transmission medium, and installed in the storage unit 308. Additionally, the program may be installed in the ROM 302 or storage unit 308 beforehand.

Note that the program that the computer executes may be a program wherein the processing is performed in the time sequence along the sequence described in the present Specification, or may be a program wherein the processing is performed in parallel or at necessary timing such as when call-up is performed.

The embodiments of the present invention are not restricted to the above-mentioned embodiment, and various modifications may be made without departing from the essence of the present invention.

For example, the above-mentioned image encoding device 51 and image decoding device 101 may be applied to an optional electronic device. Hereafter, an example thereof will be described.

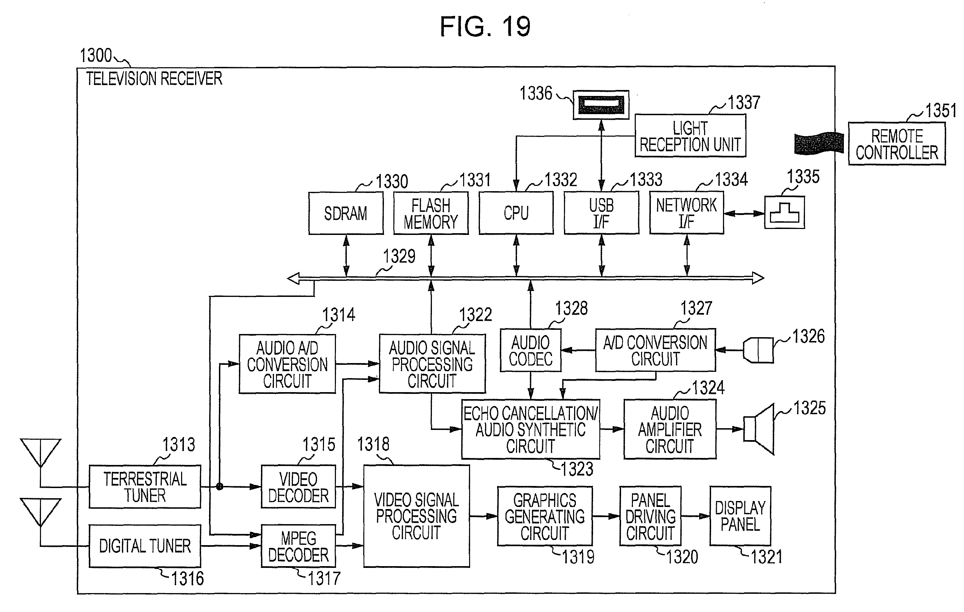

Fig. 19 is a block diagram illustrating a principal configuration example of a television receiver using the image decoding device to which the present invention has been applied.

A television receiver 1300 shown in Fig. 19 includes a terrestrial tuner 1313, a video decoder 1315, a video signal processing circuit 1318, a graphics generating circuit 1319, a panel driving circuit 1320, and a display panel 1321.

The terrestrial tuner 1313 receives the broadcast wave signals of a terrestrial analog broadcast via an antenna, demodulates, obtains video signals, and supplies these to the video decoder 1315. The video decoder 1315 subjects the video signals supplied from the terrestrial tuner 1313 to decoding processing, and supplies the obtained digital component signals to the video signal processing circuit 1318.

The video signal processing circuit 1318 subjects the video data supplied from the video decoder 1315 to predetermined processing such as noise removal or the like, and supplies the obtained video data to the graphics generating circuit 1319.

The graphics generating circuit 1319 generates the video data of a program to be displayed on a display panel 1321, or image data due to processing based on an application to be supplied via a network, or the like, and supplies the generated video data or image data to the panel driving circuit 1320. Also, the graphics generating circuit 1319 also performs processing such as supplying video data obtained by generating video data (graphics) for the user displaying a screen used for selection of an item or the like, and superimposing this on the video data of a program, to the panel driving circuit 1320 as appropriate.

The panel driving circuit 1320 drives the display panel 1321 based on the data supplied from the graphics generating circuit 1319 to display the video of a program, or the above-mentioned various screens on the display panel 1321.

The display panel 1321 is made up of an LCD (Liquid Crystal Display) and so forth, and displays the video of a program or the like in accordance with the control by the panel driving circuit 1320.

Also, the television receiver 1300 also includes an audio A/D (Analog/Digital) conversion circuit 1314, an audio signal processing circuit 1322, an echo cancellation/audio synthesizing circuit 1323, an audio amplifier circuit 1324, and a speaker 1325.

The terrestrial tuner 1313 demodulates the received broadcast wave signal, thereby obtaining not only a video signal but also an audio signal. The terrestrial tuner 1313 supplies the obtained audio signal to the audio A/D conversion circuit 1314.

The audio A/D conversion circuit 1314 subjects the audio signal supplied from the terrestrial tuner 1313 to A/D conversion processing, and supplies the obtained digital audio signal to the audio signal processing circuit 1322.

The audio signal processing circuit 1322 subjects the audio data supplied from the audio A/D conversion circuit 1314 to predetermined processing such as noise removal or the like, and supplies the obtained audio data to the echo cancellation/audio synthesizing circuit 1323.

The echo cancellation/audio synthesizing circuit 1323 supplies the audio data supplied from the audio signal processing circuit 1322 to the audio amplifier circuit 1324.

The audio amplifier circuit 1324 subjects the audio data supplied from the echo cancellation/audio synthesizing circuit 1323 to D/A conversion processing, subjects to amplifier processing to adjust to predetermined volume, and then outputs the audio from the speaker 1325.

Further, the television receiver 1300 also includes a digital tuner 1316, and an MPEG decoder 1317.

The digital tuner 1316 receives the broadcast wave signals of a digital broadcast (terrestrial digital broadcast, BS (Broadcasting Satellite)/CS (Communications Satellite) digital broadcast) via the antenna, demodulates to obtain MPEG-TS (Moving Picture Experts Group-Transport Stream), and supplies this to the MPEG decoder 1317.

The MPEG decoder 1317 descrambles the scrambling given to the MPEG-TS supplied from the digital tuner 1316, and extracts a stream including the data of a program serving as a playback object (viewing object). The MPEG decoder 1317 decodes an audio packet making up the extracted stream, supplies the obtained audio data to the audio signal processing circuit 1322, and also decodes a video packet making up the stream, and supplies the obtained video data to the video signal processing circuit 1318. Also, the MPEG decoder 1317 supplies EPG (Electronic Program Guide) data extracted from the MPEG-TS to a CPU 1332 via an unshown path.

The television receiver 1300 uses the above-mentioned image decoding device 101 as the MPEG decoder 1317 for decoding video packets in this way. Accordingly, the MPEG decoder 1317 can suppress increase in compressed information, and also improve prediction precision in the same way as with the case of the image decoding device 101.

The video data supplied from the MPEG decoder 1317 is, in the same way as with the case of the video data supplied from the video decoder 1315, subjected to predetermined processing at the video signal processing circuit 1318. The video data subjected to predetermined processing is then superimposed as appropriate on the generated video data and so forth at the graphics generating circuit 1319, supplied to the display panel 1321 via the panel driving circuit 1320, and the image thereof is displayed thereon.

The audio data supplied from the MPEG decoder 1317 is, in the same way as with the case of the audio data supplied from the audio A/D conversion circuit 1314, subjected to predetermined processing at the audio signal processing circuit 1322. The audio data subjected to predetermined processing is then supplied to the audio amplifier circuit 1324 via the echo cancellation/audio synthesizing circuit 1323, and subjected to D/A conversion processing and amplifier processing. As a result thereof, the audio adjusted in predetermined volume is output from the speaker 1325.

Also, the television receiver 1300 also includes a microphone 1326, and an A/D conversion circuit 1327.

The A/D conversion circuit 1327 receives the user's audio signal collected by the microphone 1326 provided to the television receiver 1300 serving as for audio conversation. The A/D conversion circuit 1327 subjects the received audio signal to A/D conversion processing, and supplies the obtained digital audio data to the echo cancellation/audio synthesizing circuit 1323.

In the event that the user (user A)'s audio data of the television receiver 1300 has been supplied from the A/D conversion circuit 1327, the echo cancellation/audio synthesizing circuit 1323 perform echo cancellation with the user A's audio data taken as a object. After echo cancellation, the echo cancellation/audio synthesizing circuit 1323 outputs audio data obtained by synthesizing with other audio data and so forth, from the speaker 1325 via the audio amplifier circuit 1324.

Further, the television receiver 1300 also includes an audio codec 1328, an internal bus 1329, SDRAM (Synchronous Dynamic Random Access Memory) 1330, flash memory 1331, a CPU 1332, a USB (Universal Serial Bus) I/F 1333, and a network I/F 1334.

The A/D conversion circuit 1327 receives the user's audio signal collected by the microphone 1326 provided to the television receiver 1300 serving as for audio conversation. The A/D conversion circuit 1327 subjects the received audio signal to A/D conversion processing, and supplies the obtained digital audio data to the audio codec 1328.

The audio codec 1328 converts the audio data supplied from the A/D conversion circuit 1327 into the data of a predetermined format for transmission via a network, and supplies to the network I/F 1334 via the internal bus 1329.

The network I/F 1334 is connected to the network via a cable mounted on a network terminal 1335. The network I/F 1334 transmits the audio data supplied from the audio codec 1328 to another device connected to the network thereof, for example. Also, the network I/F 1334 receives, via the network terminal 1335, the audio data transmitted from another device connected thereto via the network for example, and supplies this to the audio codec 1328 via the internal bus 1329.

The audio codec 1328 converts the audio data supplied from the network I/F 1334 into the data of a predetermined format, and supplies this to the echo cancellation/audio synthesizing circuit 1323.

The echo cancellation/audio synthesizing circuit 1323 performs echo cancellation with the audio data supplied from the audio codec 1328 taken as a object, and outputs the data of audio obtained by synthesizing with other audio data and so forth, from the speaker 1325 via the audio amplifier circuit 1324.

The SDRAM 1330 stores various types of data necessary for the CPU 1332 performing processing.

The flash memory 1331 stores a program to be executed by the CPU 1332. The program stored in the flash memory 1331 is read out by the CPU 1332 at predetermined timing such as when activating the television receiver 1300, or the like. EPG data obtained via a digital broadcast, data obtained from a predetermined server via the network, and so forth are also stored in the flash memory 1331.

For example, MPEG-TS including the content data obtained from a predetermined server via the network by the control of the CPU 1332 is stored in the flash memory 1331. The flash memory 1331 supplies the MPEG-TS thereof to the MPEG decoder 1317 via the internal bus 1329 by the control of the CPU 1332, for example.

The MPEG decoder 1317 processes the MPEG-TS thereof in the same way as with the case of the MPEG-TS supplied from the digital tuner 1316. In this way, the television receiver 1300 receives the content data made up of video, audio, and so forth via the network, decodes using the MPEG decoder 1317, whereby video thereof can be displayed, and audio thereof can be output.

Also, the television receiver 1300 also includes a light reception unit 1337 for receiving the infrared signal transmitted from a remote controller 1351.

The light reception unit 1337 receives infrared rays from the remote controller 1351, and outputs a control code representing the content of the user's operation obtained by demodulation, to the CPU 1332.

The CPU 1332 executes the program stored in the flash memory 1331 to control the entire operation of the television receiver 1300 according to the control code supplied from the light reception unit 1337, and so forth. The CPU 1332, and the units of the television receiver 1300 are connected via an unshown path.

The USB I/F 1333 performs transmission/reception of data as to an external device of the television receiver 1300 which is connected via a USB cable mounted on a USB terminal 1336. The network I/F 1334 connects to the network via a cable mounted on the network terminal 1335, also performs transmission/reception of data other than audio data as to various devices connected to the network.

The television receiver 1300 uses the image decoding device 101 as the MPEG decoder 1317, whereby encoding efficiency can be improved. As a result thereof, the television receiver 1300 can obtain a decoded image with higher precision from broadcast wave signals received via the antenna, or the content data obtained via the network, and display this.

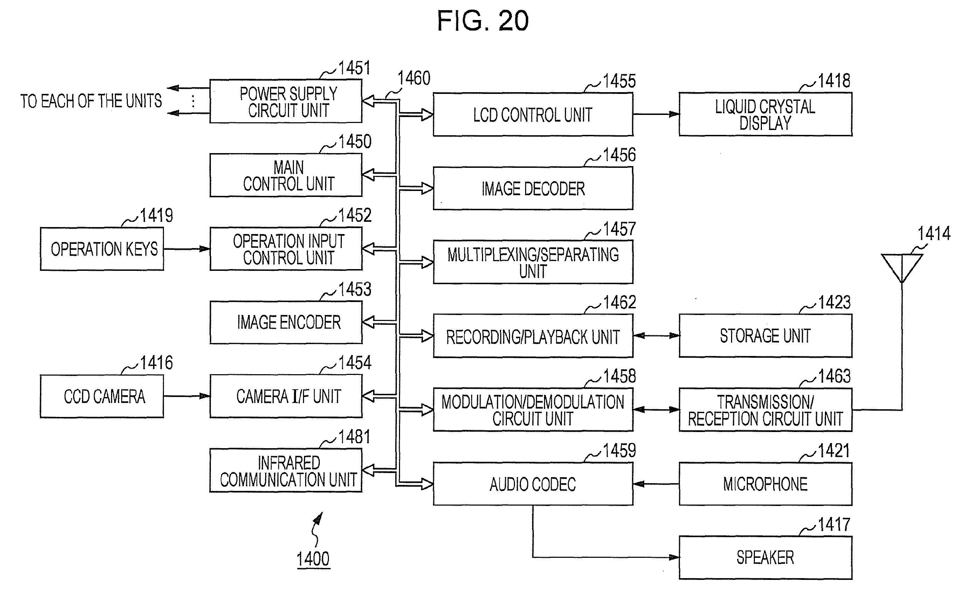

Fig. 20 is a block diagram illustrating a principal configuration example of a cellular phone using the image encoding device and image decoding device to which the present invention has been applied.

A cellular phone 1400 shown in Fig. 20 includes a main control unit 1450 configured so as to integrally control the units, a power supply circuit unit 1451, an operation input control unit 1452, an image encoder 1453, a camera I/F unit 1454, an LCD control unit 1455, an image decoder 1456, a multiplexing/separating unit 1457, a recording/playback unit 1462, a modulation/demodulation circuit unit 1458, and an audio codec 1459. These are mutually connected via a bus 1460.

Also, the cellular phone 1400 includes operation keys 1419, a CCD (Charge Coupled Devices) camera 1416, a liquid crystal display 1418, a storage unit 1423, a transmission/reception circuit unit 1463, an antenna 1414, a microphone (MIC) 1421, and a speaker 1417.

Upon a call being ended and a power key being turned on by the user's operation, the power supply circuit unit 1451 activates the cellular phone 1400 in an operational state by supplying power to the units from a battery pack.

The cellular phone 1400 performs various operations such as transmission/reception of an audio signal, transmission/reception of an e-mail and image data, image shooting, data recoding, and so forth, in various modes such as a voice call mode, a data communication mode, and so forth, under control of a main control unit 1450 made up of a CPU, ROM, RAM, and so forth.

For example, in the voice call mode, the cellular phone 1400 converts the audio signal collected by the microphone (MIC) 1421 into digital audio data by the audio codec 1459, subjects this to spectrum spread processing at the modulation/demodulation circuit unit 1458, subjects this to digital/analog conversion processing and frequency conversion processing at the transmission/reception circuit unit 1463. The cellular phone 1400 transmits the signal for transmission obtained by the conversion processing thereof to an unshown base station via the antenna 1414. The signal for transmission (audio signal) transmitted to the base station is supplied to the communication partner's cellular phone via the public telephone network.

Also, for example, in the voice call mode, the cellular phone 1400 amplifies the reception signal received at the antenna 1414, at the transmission/reception circuit unit 1463, further subjects to frequency conversion processing and analog/digital conversion processing, subjects to spectrum inverse spread processing at the modulation/demodulation circuit unit 1458, and converts into an analog audio signal by the audio codec 1459. The cellular phone 1400 outputs the converted and obtained analog audio signal thereof from the speaker 1417.

Further, for example, in the event of transmitting an e-mail in the data communication mode, the cellular phone 1400 accepts the text data of the e-mail input by the operation of the operation keys 1419 at the operation input control unit 1452. The cellular phone 1400 processes the text data thereof at the main control unit 1450, and displays on the liquid crystal display 1418 via the LCD control unit 1455 as an image.

Also, the cellular phone 1400 generates e-mail data at the main control unit 1450 based on the text data accepted by the operation input control unit 1452, the user's instructions, and so forth. The cellular phone 1400 subjects the e-mail data thereof to spectrum spread processing at the modulation/demodulation circuit unit 1458, and subjects to digital/analog conversion processing and frequency conversion processing at the transmission/reception circuit unit 1463. The cellular phone 1400 transmits the signal for transmission obtained by the conversion processing thereof to an unshown base station via the antenna 1414. The signal for transmission (e-mail) transmitted to the base station is supplied to a predetermined destination via the network, mail server, and so forth.

Also, for example, in the event of receiving an e-mail in the data communication mode, the cellular phone 1400 receives the signal transmitted from the base station via the antenna 1414 with the transmission/reception circuit unit 1463, amplifies, and further subjects to frequency conversion processing and analog/digital conversion processing. The cellular phone 1400 subjects the reception signal thereof to spectrum inverse spread processing at the modulation/demodulation circuit unit 1458 to restore the original e-mail data. The cellular phone 1400 displays the restored e-mail data on the liquid crystal display 1418 via the LCD control unit 1455.

Note that the cellular phone 1400 may record (store) the received e-mail data in the storage unit 1423 via the recording/playback unit 1462.

This storage unit 1423 is an optional rewritable storage medium. The storage unit 1423 may be, for example, semiconductor memory such as RAM, built-in flash memory, or the like, may be a hard disk, or may be a removable medium such as a magnetic disk, a magneto-optical disk, an optical disc, USB memory, a memory card, or the like. It goes without saying that the storage unit 1423 may be other than these.

Further, for example, in the event of transmitting image data in the data communication mode, the cellular phone 1400 generates image data by imaging at the CCD camera 1416. The CCD camera 1416 includes a CCD serving as an optical device such as a lens, diaphragm, and so forth, and serving as a photoelectric device, which images a subject, converts the intensity of received light into an electrical signal, and generates the image data of an image of the subject. The image data thereof is subjected to compression encoding at the image encoder 1453 using a predetermined encoding system, for example, such as MPEG2, MPEG4, or the like, via the camera I/F unit 1454, and accordingly, the image data thereof is converted into encoded image data.

The cellular phone 1400 employs the above-mentioned image encoding device 51 as the image encoder 1453 for performing such processing. Accordingly, the image encoder 1453 can suppress increase in compressed information and also improve prediction precision in the same way as with the case of the image encoding device 51.

Note that, at this time simultaneously, the cellular phone 1400 converts the audio collected at the microphone (MIC) 1421 from analog to digital at the audio codec 1459, and further encodes this during imaging by the CCD camera 1416.

The cellular phone 1400 multiplexes the encoded image data supplied from the image encoder 1453, and the digital audio data supplied from the audio codec 1459 at the multiplexing/separating unit 1457 using a predetermined method. The cellular phone 1400 subjects the multiplexed data obtained as a result thereof to spectrum spread processing at the modulation/demodulation circuit unit 1458, and subjects to digital/analog conversion processing and frequency conversion processing at the transmission/reception circuit unit 1463. The cellular phone 1400 transmits the signal for transmission obtained by the conversion processing thereof to an unshown base station via the antenna 1414. The signal for transmission (image data) transmitted to the base station is supplied to the communication partner via the network or the like.

Note that in the event that image data is not transmitted, the cellular phone 1400 may also display the image data generated at the CCD camera 1416 on the liquid crystal display 1418 via the LCD control unit 1455 instead of the image encoder 1453.

Also, for example, in the event of receiving the data of a moving image file linked to a simple website or the like in the data communication mode, the cellular phone 1400 receives the signal transmitted from the base station at the transmission/reception circuit unit 1463 via the antenna 1414, amplifies, and further subjects to frequency conversion processing and analog/digital conversion processing. The cellular phone 1400 subjects the received signal to spectrum inverse spread processing at the modulation/demodulation circuit unit 1458 to restore the original multiplexed data. The cellular phone 1400 separates the multiplexed data thereof at the multiplexing/separating unit 1457 into encoded image data and audio data.

The cellular phone 1400 decodes the encoded image data at the image decoder 1456 using the decoding system corresponding to a predetermined encoding system such as MPEG2, MPEG4, or the like, thereby generating playback moving image data, and displays this on the liquid crystal display 1418 via the LCD control unit 1455. Thus, moving image data included in a moving image file linked to a simple website is displayed on the liquid crystal display 1418, for example.

The cellular phone 1400 employs the above-mentioned image decoding device 101 as the image decoder 1456 for performing such processing. Accordingly, the image decoder 1456 can suppress increase in compressed information and also improve prediction precision in the same way as with the case of the image decoding device 101.

At this time, simultaneously, the cellular phone 1400 converts the digital audio data into an analog audio signal at the audio codec 1459, and outputs this from the speaker 1417. Thus, audio data included in a moving image file linked to a simple website is played, for example.

Note that, in the same way as with the case of e-mail, the cellular phone 1400 may record (store) the received data liked to a simile website or the like in the storage unit 1423 via the recording/playback unit 1462.

Also, the cellular phone 1400 analyzes the two-dimensional code obtained by being imaged by the CCD camera 1416 at the main control unit 1450, whereby information recorded in the two-dimensional code can be obtained.

Further, the cellular phone 1400 can communicate with an external device at the infrared communication unit 1481 using infrared rays.

The cellular phone 1400 employs the image encoding device 51 as the image encoder 1453, whereby the encoding efficiency of encoded data to be generated by encoding the image data generated at the CCD camera 1416 can be improved, for example. As a result, the cellular phone 1400 can provide encoded data (image data) with excellent encoding efficiency to another device.

Also, the cellular phone 1400 employs the image decoding device 101 as the image decoder 1456, whereby a prediction image with high precision can be generated. As a result thereof, the cellular phone 1400 can obtain a decoded image with higher precision from a moving image file linked to a simple website, and display this, for example.

Note that description has been made so far wherein the cellular phone 1400 employs the CCD camera 1416, but the cellular phone 1400 may employ an image sensor (CMOS image sensor) using CMOS (Complementary Metal Oxide Semiconductor) instead of this CCD camera 1416. In this case as well, the cellular phone 1400 can image a subject and generate the image data of an image of the subject in the same way as with the case of employing the CCD camera 1416.

Also, description has been made so far regarding the cellular phone 1400, but the image encoding device 51 and image decoding device 101 may be applied to any kind of device in the same way as with the case of the cellular phone 1400 as long as it is a device having the same imaging function and communication function as those of the cellular phone 1400, for example, such as a PDA (Personal Digital Assistants), smart phone, UMPC (Ultra Mobile Personal Computers), net book, notebook-sized personal computer, or the like.

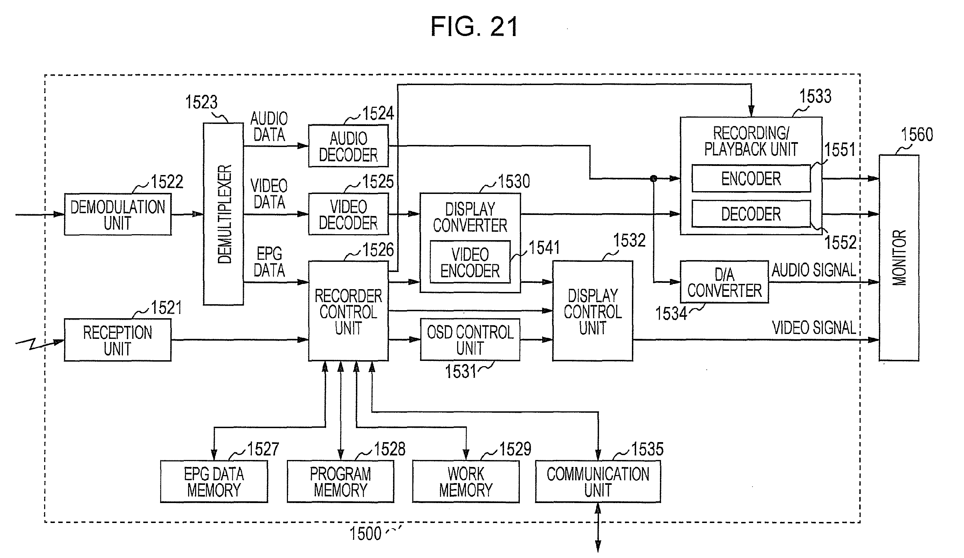

Fig. 21 is a block diagram illustrating a principal configuration example of a hard disk recorder which employs the image encoding device and image decoding device to which the present invention has been applied.

A hard disk recorder (HDD recorder) 1500 shown in Fig. 21 is a device which stores, in a built-in hard disk, audio data and video data of a broadcast program included in broadcast wave signals (television signals) received by a tuner and transmitted from a satellite or a terrestrial antenna or the like, and provides the stored data to the user at timing according to the user's instructions.

The hard disk recorder 1500 can extract audio data and video data from broadcast wave signals, decode these as appropriate, and store in the built-in hard disk, for example. Also, the hard disk recorder 1500 can also obtain audio data and video data from another device via the network, decode these as appropriate, and store in the built-in hard disk, for example.

Further, the hard disk recorder 1500 decodes audio data and video data recorded in the built-in hard disk, supplies to a monitor 1560, and displays an image thereof on the screen of the monitor 1560, for example. Also, the hard disk recorder 1500 can output sound thereof from the speaker of the monitor 1560.

The hard disk recorder 1500 decodes audio data and video data extracted from the broadcast wave signals obtained via the tuner, or the audio data and video data obtained from another device via the network, supplies to the monitor 1560, and displays an image thereof on the screen of the monitor 1560, for example. Also, the hard disk recorder 1500 can output sound thereof from the speaker of the monitor 1560.

It goes without saying that operations other than these may be performed.

As shown in Fig. 21, the hard disk recorder 1500 includes a reception unit 1521, a demodulation unit 1522, a demultiplexer 1523, an audio decoder 1524, a video decoder 1525, and a recorder control unit 1526. The hard disk recorder 1500 further includes EPG data memory 1527, program memory 1528, work memory 1529, a display converter 1530, an OSD (On Screen Display) control unit 1531, a display control unit 1532, a recording/playback unit 1533, a D/A converter 1534, and a communication unit 1535.

Also, the display converter 1530 includes a video encoder 1541. The recording/playback unit 1533 includes an encoder 1551 and a decoder 1552.

The reception unit 1521 receives the infrared signal from the remote controller (not shown), converts into an electrical signal, and outputs to the recorder control unit 1526. The recorder control unit 1526 is configured of, for example, a microprocessor and so forth, and executes various types of processing in accordance with the program stored in the program memory 1528. At this time, the recorder control unit 1526 uses the work memory 1529 according to need.

The communication unit 1535, which is connected to the network, performs communication processing with another device via the network. For example, the communication unit 1535 is controlled by the recorder control unit 1526 to communicate with a tuner (not shown), and to principally output a channel selection control signal to the tuner.

The demodulation unit 1522 demodulates the signal supplied from the tuner, and outputs to the demultiplexer 1523. The demultiplexer 1523 separates the data supplied from the demodulation unit 1522 into audio data, video data, and EPG data, and outputs to the audio decoder 1524, video decoder 1525, and recorder control unit 1526, respectively.

The audio decoder 1524 decodes the input audio data, for example, using the MPEG system, and outputs to the recording/playback unit 1533. The video decoder 1525 decodes the input video data, for example, using the MPEG system, and outputs to the display converter 1530. The recorder control unit 1526 supplies the input EPG data to the EPG data memory 1527 for storing.

The display converter 1530 encodes the video data supplied from the video decoder 1525 or recorder control unit 1526 into, for example, the video data conforming to the NTSC (National Television Standards Committee) system using the video encoder 1541, and outputs to the recording/playback unit 1533. Also, the display converter 1530 converts the size of the screen of the video data supplied from the video decoder 1525 or recorder control unit 1526 into the size corresponding to the size of the monitor 1560. The display converter 1530 further converts the video data of which the screen size has been converted into the video data conforming to the NTSC system using the video encoder 1541, converts into an analog signal, and outputs to the display control unit 1532.

The display control unit 1532 superimposes, under the control of the recorder control unit 1526, the OSD signal output from the OSD (On Screen Display) control unit 1531 on the video signal input from the display converter 1530, and outputs to the display of the monitor 1560 for display.

Also, the audio data output from the audio decoder 1524 has been converted into an analog signal using the D/A converter 1534, and supplied to the monitor 1560. The monitor 1560 outputs this audio signal from a built-in speaker.

The recording/playback unit 1533 includes a hard disk as a storage medium in which video data, audio data, and so forth are recorded.

The recording/playback unit 1533 encodes the audio data supplied from the audio decoder 1524 by the encoder 1551 using the MPEG system, for example. Also, the recording/playback unit 1533 encodes the video data supplied from the video encoder 1541 of the display converter 1530 by the encoder 1551 using the MPEG system. The recording/playback unit 1533 synthesizes the encoded data of the audio data thereof, and the encoded data of the video data thereof using the multiplexer. The recording/playback unit 1533 amplifies the synthesized data by channel coding, and writes the data thereof in the hard disk via a recording head.

The recording/playback unit 1533 plays the data recorded in the hard disk via a playback head, amplifies, and separates into audio data and video data using the demultiplexer. The recording/playback unit 1533 decodes the audio data and video data by the decoder 1552 using the MPEG system. The recording/playback unit 1533 converts the decoded audio data from digital to analog, and outputs to the speaker of the monitor 1560. Also, the recording/playback unit 1533 converts the decoded video data from digital to analog, and outputs to the display of the monitor 1560.

The recorder control unit 1526 reads out the latest EPG data from the EPG data memory 1527 based on the user's instructions indicated by the infrared signal from the remote controller which is received via the reception unit 1521, and supplies to the OSD control unit 1531. The OSD control unit 1531 generates image data corresponding to the input EPG data, and outputs to the display control unit 1532. The display control unit 1532 outputs the video data input from the OSD control unit 1531 to the display of the monitor 1560 for display. Thus, EPG (Electronic Program Guide) is displayed on the display of the monitor 1560.

Also, the hard disk recorder 1500 can obtain various types of data such as video data, audio data, EPG data, and so forth supplied from another device via the network such as the Internet or the like.

The communication unit 1535 is controlled by the recorder control unit 1526 to obtain encoded data such as video data, audio data, EPG data, and so forth transmitted from another device via the network, and to supply this to the recorder control unit 1526. The recorder control unit 1526 supplies the encoded data of the obtained video data and audio data to the recording/playback unit 1533, and stores in the hard disk, for example. At this time, the recorder control unit 1526 and recording/playback unit 1533 may perform processing such as re-encoding or the like according to need.

Also, the recorder control unit 1526 decodes the encoded data of the obtained video data and audio data, and supplies the obtained video data to the display converter 1530. The display converter 1530 processes, in the same way as the video data supplied from the video decoder 1525, the video data supplied from the recorder control unit 1526, supplies to the monitor 1560 via the display control unit 1532 for displaying an image thereof.

Alternatively, an arrangement may be made wherein in accordance with this image display, the recorder control unit 1526 supplies the decoded audio data to the monitor 1560 via the D/A converter 1534, and outputs audio thereof from the speaker.

Further, the recorder control unit 1526 decodes the encoded data of the obtained EPG data, and supplies the decoded EPG data to the EPG data memory 1527.

The hard disk recorder 1500 thus configured employs the image decoding device 101 as the video decoder 1525, decoder 1552, and a decoder housed in the recorder control unit 1526. Accordingly, the video decoder 1525, decoder 1552, and decoder housed in the recorder control unit 1526 can suppress increase in compressed information, and also improve prediction precision in the same way as with the case of the image decoding device 101.

Accordingly, the hard disk recorder 1500 can generate a prediction image with high precision. As a result thereof, the hard disk recorder 1500 can obtain a decoded image with higher precision, for example, from the encoded data of video data received via the tuner, the encoded data of video data read out from the hard disk of the recording/ playback unit 1533, or the encoded data of video data obtained via the network, and display on the monitor 1560.

Also, the hard disk recorder 1500 employs the image encoding device 51 as the encoder 1551. Accordingly, the encoder 1551 can suppress increase in compressed information, and also improve prediction precision in the same way as with the case of the image encoding device 51.

Accordingly, the hard disk recorder 1500 can improve the encoding efficiency of encoded data to be recorded in the hard disk, for example. As a result thereof, the hard disk recorder 1500 can use the storage region of the hard disk in a more effective manner.

Note that description has been made so far regarding the hard disk recorder 1500 for recording video data and audio data in the hard disk, but it goes without saying that any kind of recording medium may be employed. For example, even with a recorder to which a recording medium other than a hard disk, such as flash memory, optical disc, a video tape, or the like, is applied, in the same way as with the case of the above-mentioned hard disk recorder 1500, the image encoding device 51 and image decoding device 101 can be applied thereto.

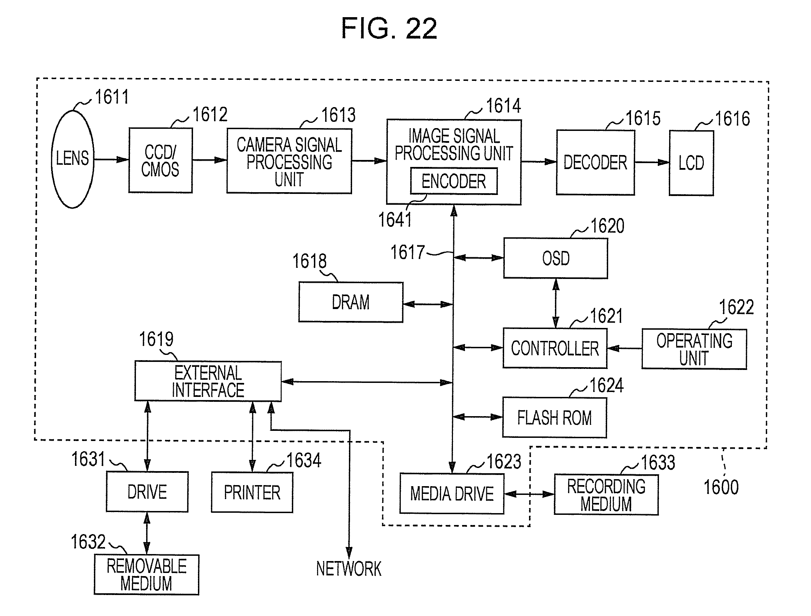

Fig. 22 is a block diagram illustrating a principal configuration example of a camera employing the image decoding device and image encoding device to which the present invention has been applied.

A camera 1600 shown in Fig. 22 images a subject, displays an image of the subject on an LCD 1616, and records this in a recording medium 1633 as image data.

A lens block 1611 inputs light (i.e., video of a subject) to a CCD/CMOS 1612. The CCD/CMOS 1612 is an image sensor employing a CCD or CMOS, converts the intensity of received light into an electrical signal, and supplies to a camera signal processing unit 1613.

The camera signal processing unit 1613 converts the electrical signal supplied from the CCD/CMOS 1612 into color difference signals of Y, Cr, and Cb, and supplies to an image signal processing unit 1614. The image signal processing unit 1614 subjects, under the control of a controller 1621, the image signal supplied from the camera signal processing unit 1613 to predetermined image processing, or encodes the image signal thereof by an encoder 1641 using the MPEG system for example. The image signal processing unit 1614 supplies encoded data generated by encoding an image signal, to a decoder 1615. Further, the image signal processing unit 1614 obtains data for display generated at an on-screen display (OSD) 1620, and supplies this to the decoder 1615.

With the above-mentioned processing, the camera signal processing unit 1613 takes advantage of DRAM (Dynamic Random Access Memory) 1618 connected via a bus 1617 to hold image data, encoded data encoded from the image data thereof, and so forth in the DRAM 1618 thereof according to need.

The decoder 1615 decodes the encoded data supplied from the image signal processing unit 1614, and supplies obtained image data (decoded image data) to the LCD 1616. Also, the decoder 1615 supplies the data for display supplied from the image signal processing unit 1614 to the LCD 1616. The LCD 1616 synthesizes the image of the decoded image data, and the image of the data for display, supplied from the decoder 1615 as appropriate, and displays a synthesizing image thereof.

The on-screen display 1620 outputs, under the control of the controller 1621, data for display such as a menu screen or icon or the like made up of a symbol, characters, or a figure to the image signal processing unit 1614 via the bus 1617.

Based on a signal indicating the content commanded by the user using an operating unit 1622, the controller 1621 executes various types of processing, and also controls the image signal processing unit 1614, DRAM 1618, external interface 1619, on-screen display 1620, media drive 1623, and so forth via the bus 1617. A program, data, and so forth necessary for the controller 1621 executing various types of processing are stored in FLASH ROM 1624.

For example, the controller 1621 can encode image data stored in the DRAM 1618, or decode encoded data stored in the DRAM 1618 instead of the image signal processing unit 1614 and decoder 1615. At this time, the controller 1621 may perform encoding and decoding processing using the same system as the encoding and decoding system of the image signal processing unit 1614 and decoder 1615, or may perform encoding and decoding processing using a system that neither the image signal processing unit 1614 nor the decoder 1615 can handle.

Also, for example, in the event that start of image printing has been instructed from the operating unit 1622, the controller 1621 reads out image data from the DRAM 1618, and supplies this to a printer 1634 connected to the external interface 1619 via the bus 1617 for printing.

Further, for example, in the event that image recording has been instructed from the operating unit 1622, the controller 1621 reads out encoded data from the DRAM 1618, and supplies this to a recording medium 1633 mounted on the media drive 1623 via the bus 1617 for storing.

The recording medium 1633 is an optional readable/writable removable medium, for example, such as a magnetic tape, a magneto-optical disk, an optical disc, semiconductor memory, or the like. It goes without saying that the recording medium 1633 is also optional regarding the type of a removable medium, and accordingly may be a tape device, or may be a disc, or may be a memory card. It goes without saying that the recoding medium 1633 may be a non-contact IC card or the like.

Alternatively, the media drive 1623 and the recording medium 1633 may be configured so as to be integrated into a non-transportable recording medium such as a built-in hard disk drive, SSD (Solid State Drive), or the like.

The external interface 1619 is configured of, for example, a USB input/output terminal and so forth, and is connected to the printer 1634 in the event of performing printing of images. Also, a drive 1631 is connected to the external interface 1619 according to need, on which the removable medium 1632 such as a magnetic disk, optical disc, or magneto-optical disk or the like is mounted as appropriate, and a computer program read out therefrom is installed in the FLASH ROM 1624 according to need.

Further, the external interface 1619 includes a network interface to be connected to a predetermined network such as a LAN, the Internet, or the like. For example, in accordance with the instructions from the operating unit 1622, the controller 1621 can read out encoded data from the DRAM 1618, and supply this from the external interface 1619 to another device connected via the network. Also, the controller 1621 can obtain, via the external interface 1619, encoded data or image data supplied from another device via the network, and hold this in the DRAM 1618, or supply this to the image signal processing unit 1614.

The camera 1600 thus configured employs the image decoding device 101 as the decoder 1615. Accordingly, the decoder 1615 can suppress increase in V compressed information, and also improve prediction precision in the same way as with the case of the image decoding device 101.

Accordingly, the camera 1600 can generate a prediction image with high precision. As a result thereof, the camera 1600 can obtain a decoded image with higher precision, for example, from the image data generated at the CCD/CMOS 1612, the encoded data of video data read out from the DRAM 1618 or recording medium 1633, or the encoded data of video data obtained via the network, and display on the LCD 1616.

Also, the camera 1600 employs the image encoding device 51 as the encoder 1641. Accordingly, the encoder 1641 can suppress increase in V compressed information, and also improve prediction precision in the same way as with the case of the image encoding device 51.

Accordingly, the camera 1600 can improve encoding efficiency of encoded data to be recorded in the hard disk, for example. As a result thereof, the camera 1600 can use the storage region of the DRAM 1618 or recording medium 1633 in a more effective manner.

Note that the decoding method of the image decoding device 101 may be applied to the decoding processing that the controller 1621 performs. Similarly, the encoding method of the image encoding device 51 may be applied to the encoding processing that the controller 1621 performs.

Also, the image data that the camera 1600 image may be a moving image, or may be a still image.

It goes without saying that the image encoding device 51 and image decoding device 101 may be applied to a device or system other than the above-mentioned devices.

Reference Signs List

51 image encoding device, 66 lossless encoding unit, 74 intra prediction unit, 75 motion prediction/compensation unit, 76 motion vector precision determining unit, 77 prediction image selecting unit, 81 integer pixel precision motion prediction/compensation unit, 82 fractional pixel precision motion prediction/compensation unit, 83 motion vector information accumulating buffer, 84 prediction motion vector calculating unit, 85 motion vector information encoding unit, 86 mode determining unit, 91 current motion vector precision determining unit, 92 adjacent motion vector precision determining unit, 93 precision flag generating unit, 101 image decoding device, 112 lossless decoding unit, 121 intra prediction unit, 122 motion prediction/compensation unit, 123 motion vector precision determining unit, 124 switch, 151 motion vector information reception unit, 152 prediction motion vector generating unit, 153 motion vector restructuring unit, 154 motion vector information accumulating buffer, 155 image prediction unit, 161 precision flag reception unit, 162 adjacent motion vector precision determining unit, 163 current motion vector precision determining unit

**Claims**

1. An image processing device comprising:

precision flag generating means configured to generate a precision flag indicating whether the precision of the motion vector information of a current block, and the precision of the motion vector information of an adjacent block adjacent to said current block agree or differ; and
encoding means configured to encode the motion vector information of said current block, and said precision flag generated by said precision flag generating means.

**2.** The image processing device according to Claim 1, further comprising:

prediction motion vector generating means configured to perform median prediction by converting the precision of the motion vector information of said adjacent block into the precision of the motion vector information of said current block to generate prediction motion vector information in the event that said prediction flag generated by said precision flag generating means indicates that the precision of the motion vector information of said current block, and the precision of the motion vector information of said adjacent block differ;

wherein said encoding means encode difference between the motion vector information of said current block, and said prediction motion vector information as the motion vector information of said current block.

**3.** The image processing device according to Claim 2, wherein said precision flag generating means and said prediction motion vector generating means use a block adjacent to the left of said current block as said adjacent block.

**4.** The image processing device according to Claim 2, wherein said precision flag generating means and said prediction motion vector generating means use a block which is adjacent to said current block and which also has been most recently subjected to encoding processing, as said adjacent block.

**5.** The image processing device according to Claim 2, wherein said precision flag generating means and said prediction motion vector generating means use a block which is adjacent to said current block, and which also provides the motion vector information selected by median prediction, as said adjacent block.

**6.** An image processing method comprising the step of:

causing an image processing device
to generate a precision flag indicating whether the precision of the motion vector information of a current block, and the precision of the motion vector information of an adjacent block adjacent to said current block agree or differ; and
to encode the motion vector information of said current block, and said generated precision flag.

**7.** An image processing device comprising:

decoding means configured to decode the encoded motion vector information of a current block, and a precision flag indicating whether the precision of the motion vector information of said current block, and the precision of the motion vector information of an adjacent block adjacent to said current block agree or differ;
motion vector restructuring means configured to restructure the motion vector information of said current block decoded by said decoding means using said precision flag decoded by said decoding means; and
prediction image generating means configured to generate the prediction image of said current block using the motion vector information of said current block restructured by said motion vector restructuring means.

**8.** The image processing device according to Claim 7, further comprising:

prediction motion vector generating means configured to perform median prediction by converting the precision of the motion vector information of said adjacent block into the precision of the motion vector information of said current block to generate prediction motion vector information in the event that said prediction flag decoded by said decoding means indicates that the precision of the motion vector information of said current block, and the precision of the motion vector information of said adjacent block differ;

wherein said motion vector restructuring means restructure the motion vector information of said current block decoded by said decoding means using said precision flag decoded by said decoding means, and said prediction motion vector information generated by said prediction motion vector generating means.

**9.** The image processing device according to Claim 8, wherein said motion vector restructuring means and said prediction motion vector generating means use a block adjacent to the left of said current block as said adjacent block.

**10.** The image processing device according to Claim 8, wherein said motion vector restructuring means and said prediction motion vector generating means use a block which is adjacent to said current block and which also has been most recently subjected to encoding processing, as said adjacent block.

**11.** The image processing device according to Claim 8, wherein said motion vector restructuring means and said prediction motion vector generating means use a block which is adjacent to said current block, and which also provides the motion vector information selected by median prediction, as said adjacent block.

**12.** An image processing method comprising the step of:

causing an image processing device
to decode the encoded motion vector information of a current block, and a precision flag indicating whether the precision of the motion vector information of said current block, and the precision of the motion vector information of an adjacent block adjacent to said current block agree or differ;
to restructure the decoded motion vector information of said current block using said decoded precision flag; and
to generate the prediction image of said current block using the restructured motion vector information of said current block.

FIG. 1

# FIG. 2

MACRO BLOCK TYPE

| 16×16 | 16×8 | 8×16 | 8×8 |

SUB-MACRO BLOCK TYPE

| 8×8 | 8×4 | 4×8 | 4×4 |

# FIG. 3

| A | e₁ | b | | A |
|---|---|---|---|---|
| | e₂ | e₃ | | |
| d | | c | | d |
| | | | | |
| A | | b | | A |

FIG. 4

FIG. 5

## FIG. 6

EP 2 405 659 A1

## FIG. 7

PREDICTION IMAGE SELECTING UNIT ~77

FRAME MEMORY ~72

REFERENCE IMAGE

MOTION PREDICTION/COMPENSATION UNIT ~75

62

66

LOSSLESS ENCODING UNIT

86

MODE DETERMINING UNIT

81

INTEGER PIXEL PRECISION MOTION PREDICTION/ COMPENSATION UNIT

SCREEN SORTING BUFFER

RAW IMAGE

$mvd_E$
horizontal_mv_precision_change_flag
vertical_mv_precision_change_flag

85

MOTION VECTOR INFORMATION ENCODING UNIT

$mv_E$

82

FRACTIONAL PIXEL PRECISION MOTION PREDICTION/ COMPENSATION UNIT

$mv_E$

83

MOTION VECTOR INFORMATION ACCUMULATING BUFFER

84

PREDICTION MOTION VECTOR CALCULATING UNIT

$pmv_E$

$mv_A, mv_B, mv_C$

MOTION VECTOR INFORMATION IN ADJACENT BLOCK

MOTION VECTOR INFORMATION IN CURRENT BLOCK

91

CURRENT MOTION VECTOR PRECISION DETERMINING UNIT

92

ADJACENT MOTION VECTOR PRECISION DETERMINING UNIT

curr_horizontal_mv_precision_param
curr_vertical_mv_precision_param

93

PRECISION FLAG GENERATING UNIT

pred_horizontal_mv_precision_param
pred_vertical_mv_precision_param

horizontal_mv_precision_change_flag
vertical_mv_precision_change_flag

MOTION VECTOR PRECISION DETERMINING UNIT ~76

EP 2 405 659 A1

39

# FIG. 8

START OF ENCODING PROCESSING

PERFORM A/D CONVERSION — S11

PERFORM SORTING — S12

CALCULATE DIFFERENCE BETWEEN IMAGE AND PREDICTION IMAGE — S13

PERFORM ORTHOGONAL TRANSFORM — S14

PERFORM QUANTIZATION — S15

PERFORM INVERSE QUANTIZATION — S16

PERFORM INVERSE ORTHOGONAL TRANSFORM — S17

ADD PREDICTION IMAGE — S18

PERFORM FILTERING — S19

STORE — S20

PREDICTION PROCESSING — S21

SELECT PREDICTION IMAGE — S22

PERFORM ENCODING — S23

ACCUMULATE — S24

CONTROL RATE — S25

END

# FIG. 9

```
      ( START OF PREDICTION PROCESSING )
                      |
                      v
   ||  INTRA PREDICTION PROCESSING  ||   S31
                      |
                      v
   ||   INTER MOTION PREDICTION     ||   S32
   ||       PROCESSING              ||
                      |
                      v
   |      DETERMINE OPTIMAL          |    S33
   |    INTER PREDICTION MODE        |
                      |
                      v
               (  RETURN  )
```

# FIG. 10

```
( START OF INTRA PREDICTION PROCESSING )
                    │
                    ▼
┌─────────────────────────────────────────┐  S41
│   PERFORM INTRA PREDICTION AS TO         │
│      THE INTRA PREDICTION MODES OF       │
│ 4×4 PIXELS, 8×8 PIXELS, AND 16×16 PIXELS │
└─────────────────────────────────────────┘
                    │
                    ▼
┌─────────────────────────────────────────┐  S42
│   CALCULATE COST FUNCTION VALUE AS       │
│      TO THE INTRA PREDICTION MODES       │
└─────────────────────────────────────────┘
                    │
                    ▼
┌─────────────────────────────────────────┐  S43
│   DETERMINE OPTIMAL MODE AS              │
│      TO THE INTRA REDICTION MODES        │
└─────────────────────────────────────────┘
                    │
                    ▼
┌─────────────────────────────────────────┐  S44
│ SELECT OPTIMAL INTRA PREDICTION MODE     │
│ OUT OF THE OPTIMAL MODES DETERMINED      │
│    AS TO THE INTRA PREDICTION MODES      │
└─────────────────────────────────────────┘
                    │
                    ▼
              ( RETURN )
```

# FIG. 11

START OF INTER MOTION PREDICTION PROCESSING

DETERMINE MOTION VECTOR AND REFERENCE IMAGE AS TO THE INTER PREDICTION MODES OF 4×4 PIXELS THROUGH 16×16 PIXELS   S51

PERFORM MOTION PREDICTION AND COMPENSATION PROCESSING AS TO REFERENCE IMAGE BASED ON MOTION VECTOR REGARDING THE INTER PREDICTION MODES   S52

MOTION VECTOR PRECISION DETERMINATION PROCESSING   S53

GENERATE MOTION VECTOR INFORMATION REGARDING MOTION VECTOR DETERMINED AS TO THE INTER PREDICTION MODES   S54

CALCULATE COST FUNCTION VALUE AS TO THE INTER PREDICTION MODES   S55

RETURN

# FIG. 12

$$\text{START OF MOTION VECTOR}$$
$$\text{PRECISION DETERMINATION PROCESSING}$$

↓

DETERMINE curr_horizontal_mv_precision_param AND curr_vertical_mv_precision_param — S71

↓

DETERMINE pred_horizontal_mv_precision_param AND pred_vertical_mv_precision_param — S72

↓

S73 — curr_horizontal_mv_precision_param = pred_horizontal_mv_precision_param?

— No → horizontal_mv_precision_change_flag = 1 — S75

Yes ↓

horizontal_mv_precision_change_flag = 0 — S74

↓

S76 — curr_vertical_mv_precision_param = pred_vertical_mv_precision_param?

— No → vertical_mv_precision_change_flag = 1 — S78

Yes ↓

vertical_mv_precision_change_flag = 0 — S77

↓

RETURN

FIG. 13

EP 2 405 659 A1

FIG. 14

LOSSLESS DECODING UNIT ~112

SWITCH ~124

mvd_E

MOTION PREDICTION/COMPENSATION UNIT ~122

155
IMAGE PREDICTION UNIT

REFERENCE IMAGE

151
MOTION VECTOR INFORMATION RECEPTION UNIT

mv_E ~153
MOTION VECTOR RESTRUCTURING UNIT

154
MOTION VECTOR INFORMATION ACCUMULATING BUFFER

FRAME MEMORY

119

152~
PREDICTION MOTION VECTOR GENERATING UNIT

pmv_E

mv_A, mv_B, mv_C

curr_horizontal_mv_precision_param
curr_vertical_mv_precision_param

163~
CURRENT MOTION VECTOR PRECISION DETERMINING UNIT

162~
ADJACENT MOTION VECTOR PRECISION DETERMINING UNIT

pred_horizontal_mv_precision_param
pred_vertical_mv_precision_param

161~
PRECISION FLAG RECEPTION UNIT

horizontal_mv_precision_change_flag
vertical_mv_precision_change_flag

MOTION VECTOR PRECISION DETERMINING UNIT ~123

EP 2 405 659 A1

46

# FIG. 15

```
( START OF DECODING PROCESSING )
              │
              ▼
┌─────────────────────────────┐  S131
│      ACCUMULATE IMAGE       │
└─────────────────────────────┘
              │
              ▼
┌─────────────────────────────┐  S132
│      PERFORM DECODING       │
└─────────────────────────────┘
              │
              ▼
┌─────────────────────────────┐  S133
│ PERFORM INVERSE QUANTIZATION│
└─────────────────────────────┘
              │
              ▼
┌─────────────────────────────┐  S134
│      PERFORM INVERSE        │
│    ORTHOGONAL TRANSFORM     │
└─────────────────────────────┘
              │
              ▼
┌─────────────────────────────┐  S135
│     ADD PREDICTION IMAGE    │
└─────────────────────────────┘
              │
              ▼
┌─────────────────────────────┐  S136
│      PERFORM FILTERING      │
└─────────────────────────────┘
              │
              ▼
┌─────────────────────────────┐  S137
│           STORE             │
└─────────────────────────────┘
              │
              ▼
┌║───────────────────────────║┐  S138
│║    PREDICTION PROCESSING  ║│
└║───────────────────────────║┘
              │
              ▼
┌─────────────────────────────┐  S139
│    SELECT PREDICTION IMAGE  │
└─────────────────────────────┘
              │
              ▼
┌─────────────────────────────┐  S140
│      PERFORM SORTING        │
└─────────────────────────────┘
              │
              ▼
┌─────────────────────────────┐  S141
│    PERFORM D/A CONVERSION   │
└─────────────────────────────┘
              │
              ▼
          (   END   )
```

# FIG. 16

START OF PREDICTION
PROCESSING

S171

HAS INTRA ENCODING
BEEN PERFORMED? — No

Yes  S172

OBTAIN INTRA PREDICTION
MODE INFORMATION

S173

PERFORM INTRA PREDICTION

OBTAIN PREDICTION MODE
INFORMATION AND OTHERS — S174

DETERMINE PRECISION OF
MOTION VECTOR — S175

PERFORM MEDIAN PREDICTION — S176

RESTRUCTURE MOTION VECTOR — S177

GENERATE PREDICTION IMAGE — S178

RETURN

FIG. 17

EP 2 405 659 A1

# FIG. 18

EP 2 405 659 A1

# FIG. 19

EP 2 405 659 A1

# FIG. 20

TO EACH OF THE UNITS

POWER SUPPLY CIRCUIT UNIT ~1451

1460

LCD CONTROL UNIT ~1455

LIQUID CRYSTAL DISPLAY ~1418

MAIN CONTROL UNIT ~1450

IMAGE DECODER ~1456

OPERATION KEYS ~1419

OPERATION INPUT CONTROL UNIT ~1452

MULTIPLEXING/SEPARATING UNIT ~1457

1414

IMAGE ENCODER ~1453

RECORDING/PLAYBACK UNIT ~1462

STORAGE UNIT ~1423

CCD CAMERA ~1416

CAMERA I/F UNIT ~1454

MODULATION/DEMODULATION CIRCUIT UNIT ~1458

TRANSMISSION/ RECEPTION CIRCUIT UNIT ~1463

INFRARED COMMUNICATION UNIT ~1481

AUDIO CODEC ~1459

MICROPHONE ~1421

1400

SPEAKER ~1417

EP 2 405 659 A1

# FIG. 21

EP 2 405 659 A1

# FIG. 22

EP 2 405 659 A1

**INTERNATIONAL SEARCH REPORT**

International application No.

PCT/JP2010/052925

A. CLASSIFICATION OF SUBJECT MATTER
*H04N7/32*(2006.01)i

According to International Patent Classification (IPC) or to both national classification and IPC

B. FIELDS SEARCHED

Minimum documentation searched (classification system followed by classification symbols)
H04N7/32

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-187025 A  (Hitachi, Ltd.), 13 July 2006 (13.07.2006), page 11, lines 10 to 29; page 13, lines 18 to 21; page 14, line 31 to page 15, line 39 & US 2004/0240550 A1    & EP 1469682 A1 & WO 2003/063503 A1    & CN 1550110 A & KR 10-2007-0108571 A | 1-12 |
| A | JP 09-121359 A  (Hitachi, Ltd.), 06 May 1997 (06.05.1997), paragraphs [0005] to [0006] (Family: none) | 3-4,9-10 |

☐ Further documents are listed in the continuation of Box C.     ☐ See patent family annex.

*    Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

Date of the actual completion of the international search
16 March, 2010 (16.03.10)

Date of mailing of the international search report
23 March, 2010 (23.03.10)

Name and mailing address of the ISA/
Japanese Patent Office

Authorized officer

Facsimile No.

Telephone No.

Form PCT/ISA/210 (second sheet) (July 2009)